# EUROPÄISCHE PATENTSCHRIFT

(11) **EP 4 419 310 B1**
(45) Veröffentlichungstag und Bekanntmachung des Hinweises auf die Patenterteilung: **12.03.2025**
(21) Anmeldenummer: 22801744.8
(22) Anmeldetag: 06.10.2022
(51) Int. Cl.: B29C 64/165, B22F 12/13, B22F 12/60, B29C 64/205, B29C 64/214, B29C 64/30, B33Y 10/00, B33Y 30/00, B33Y 40/10, B33Y 50/02

(54) **VERFAHREN UND VORRICHTUNG ZUR ADDITIVEN FERTIGUNG EINES BAUTEILS SOWIE ENTSPRECHEND GEFERTIGTES BAUTEIL**
METHOD AND DEVICE FOR THE ADDITIVE MANUFACTURING OF A PART, AND PART MANUFACTURED ACCORDINGLY
PROCÉDÉ ET DISPOSITIF DE FABRICATION ADDITIVE D'UNE PIECE ET PIECE AINSI FABRIQUÉ

(30) Priorität: 21.10.2021 DE 102021211871; 24.08.2022 DE 102022208741
(43) Veröffentlichungstag der Anmeldung: 28.08.2024
(73) Patentinhaber: BLZ BAYERISCHES LASERZENTRUM GEMEINNÜTZIGE FORSCHUNGSGES. MBH, 91052 Erlangen (DE); Friedrich-Alexander-Universität Erlangen-Nürnberg, 91054 Erlangen (DE)
(72) Erfinder: KOPP, Sebastian-Paul, 90762 Fürth (DE); DÜSENBERG, Björn, 91074 Herzogenaurach (DE); BÜCK, Andreas, 39245 Gommern (DE); SCHMIDT, Michael, 91052 Erlangen (DE)
(74) Vertreter: Rau, Schneck & Hübner Patentanwälte Rechtsanwälte PartGmbB
(86) Internationale Anmeldenummer: PCT/EP2022/077825
(87) Internationale Veröffentlichungsnummer: WO 2023/066674

(56) Entgegenhaltungen:
- WO-A1-2012/164015
- DE-T5- 112015 004 226
- US-A1- 2021 291 445

## Beschreibung

Die Erfindung betrifft ein Verfahren und eine Vorrichtung zur additiven Fertigung eines Bauteils.

In der additiven Fertigung sind verschiedene Methoden für den Pulverauftrag bekannt. Der elektrofotografische Pulverauftrag weist Vorteile gegenüber anderen Auftragsmechanismen auf, insbesondere hinsichtlich des Pulververbrauchs und der Prozesszeiten. Für den elektrofotografischen Pulverauftrag werden die zu verarbeitenden Pulver elektrostatisch aufgeladen. Dies führt zur Akkumulation von Ladungen in dem zu fertigenden Bauteil.

Die DE 11 2015 004 226 T5, US 2021/0291445 A1 und die WO 2012/164015 A1 beschreiben Verfahren und Vorrichtungen für die additive Fertigung.

Es ist eine Aufgabe der vorliegenden Erfindung, ein Verfahren zur additiven Fertigung zu verbessern, insbesondere Ladungsakkumulationen beim Pulverauftrag zu vermeiden.

Diese Aufgabe wird gelöst durch ein Verfahren mit den in Anspruch 1 angegebenen Schritten. Mindestens ein Pulver wird bereitgestellt. Mehrere Bauteil-Schichten eines zu fertigenden Bauteils werden erzeugt, wobei zur Erzeugung einer Bauteil-Schicht mindestens ein Pulveranteil des mindestens einen Pulvers aufgetragen wird. Zur Auftragung eines Pulveranteils wird der Pulveranteil elektrostatisch aufgeladen, eine Auftragseinheit zumindest bereichsweise elektrostatisch aufgeladen und der elektrostatisch aufgeladene Pulveranteil mittels der zumindest bereichsweise elektrostatisch aufgeladenen Auftragseinheit aufgenommen und auf eine Auftragsfläche übertragen. Verschiedene zur Erzeugung der Bauteil-Schichten aufzutragende Pulveranteile werden mit unterschiedlicher Polarität elektrostatisch aufgeladen.

Die Auftragseinheit wird zum Übertragen des Pulveranteils auf die Auftragsfläche mechanisch angeregt mithilfe eines Aktors, insbesondere Piezoaktors, der Auftragseinheit. Die mechanische Anregung ermöglicht eine besonders effektive und zielgerichtete Übertragung des Pulveranteils auf die Auftragsfläche. Durch die mechanische Anregung wird die Massenträgheit der an der Auftragseinheit anhaftenden Pulverpartikel überwunden. Die mechanische Anregung vergrößert die Abstände einzelner Pulverpartikel zueinander, was sowohl die interpartikulären Anziehungskräfte infolge der van-der-Waals-Wechselwirkungen als auch die elektrostatischen Anziehungskräfte vermindert. Als besonders geeignet hat sich die mechanische Anregung mithilfe eines Aktors, insbesondere eines Piezoaktors, erwiesen. Mithilfe eines Piezoaktors können besonders effiziente Anregungsmuster, insbesondere Schwingungen, erzeugt werden. Beispielsweise kann der Piezoaktor mit einer periodischen Spannung zur Erzeugung einer Schwingung beaufschlagt werden.

Erfindungsgemäß wurde erkannt, dass durch die Aufladung verschiedener Pulveranteile mit unterschiedlicher Polarität eine Ladungsakkumulation in den erzeugten Bauteil-Schichten verringert wird. Dies verbessert den Pulverauftrag weiterer Pulveranteile. Vorteilhafterweise ist eine elektrostatische Abstoßung unterschiedlicher Pulveranteile sowie der Pulverpartikel untereinander vermindert. Die Anzahl der aufeinander erzeugbaren Bauteil-Schichten ist nicht aufgrund einer sukzessive anwachsenden Ladungsakkumulation begrenzt. Insbesondere wird der Pulverauftrag durch die elektrostatische Anziehung von mit unterschiedlicher Polarität aufgeladenen Pulveranteilen unterstützt. Weitere Pulveranteile können zudem mit höherer Genauigkeit und höherer Packungsdichte aufgetragen werden. Hierdurch sind Dichte und Porosität des gefertigten Bauteils gezielt einstellbar. Die Gestaltungsfreiheit bei der Fertigung des Bauteils ist insgesamt erhöht. Das Bauteil ist insbesondere mit hoher Dichte und geringer Porosität fertigbar. Hierdurch sind Bauteile mit verbesserten mechanischen Eigenschaften erzielbar.

Besonders bevorzugt werden die zur Erzeugung verschiedener Bauteil-Schichten verwendeten Pulveranteile mit unterschiedlicher Polarität elektrostatisch aufgeladen. Dies führt zu einer zusätzlichen Anziehungskraft zwischen den nacheinander aufgetragenen Pulveranteilen und Bauteil-Schichten. Die erzeugten Bauteil-Schichten werden zusätzlich stabilisiert.

Bevorzugt werden mehrere, unterschiedliche Pulver bereitgestellt. Bei der Erzeugung der Bauteil-Schichten können Pulveranteile von unterschiedlichen Pulvern verwendet werden, um verschiedene Materialien in dem Bauteil zu kombinieren. Beispielsweise können verschiedene Bauteil-Schichten aus Pulveranteilen unterschiedlicher Materialien gefertigt werden. Es ist auch möglich, unterschiedliche Materialien in einer Bauteil-Schicht zu kombinieren. Beispielsweise können zur Erzeugung einer Bauteil-Schicht mehrere Pulveranteile unterschiedlicher Pulver sequentiell aufgetragen werden. Bevorzugt werden die in einer Bauteil-Schicht zu kombinierenden Pulveranteile mit gleicher Polarität aufgeladen.

Das mindestens eine Pulver kann ein Polymerpulver, ein Metallpulver und/oder ein Keramikpulver sein. Polymerpulver und/oder Keramikpulver sind direkt elektrostatisch aufladbar. Zur elektrostatische Aufladung können metallischen Pulvern dielektrische Bestandteile hinzugefügt werden. Beispielsweise können metallische Pulver eine Beschichtung aus einem dielektrischen Material aufweisen. Das mindestens eine Pulver kann weitere Bestandteile, beispielsweise Binder und/oder Additive aufweisen. Geeignete Additive sind insbesondere Fließhilfsmittel und/oder Ladungssteuerungsstoffe. Ladungssteuerungsstoffe können eine Aufladung des Pulvers, insbesondere eine triboelektrische Aufladung des Pulvers, unterstützen.

Das Verfahren eignet sich besonders zur Multimaterialverarbeitung. Durch die Bereitstellung verschiedener Pulver können mithilfe des Verfahrens verschiedene Werkstoffe integral zu einem Bauteil kombiniert werden. Es resultiert ein einstückiges Bauteil, das bereichsweise aus unterschiedlichen Werkstoffen besteht. Ein nachträgliches Fügen von vorgefertigten Bauteilkomponenten aus unterschiedlichen Werkstoffen ist nicht erforderlich. Beispielsweise ist eine Kombination von unterschiedlichen kommerziell erhältlichen Werkstoffen, insbesondere von kommerziell erhältlichen Polymerwerkstoffen möglich. Besonders vorteilhafterweise sind Werkstoffe mit stark unterschiedlichen Eigenschaften kombinierbar, insbesondere mit stark unterschiedlichen mechanischen und/oder thermischen Eigenschaften, beispielsweise mit stark unterschiedlichen Schmelztemperaturen. Hierdurch sind Bauteile mit gezielt einstellbaren, insbesondere lokal einstellbaren, Eigenschaften fertigbar.

Die elektrostatische Aufladung der Pulveranteile kann mittels des triboelektrischen Effekts und/oder Gasentladung erfolgen. Die auf dem Prinzip der Gasentladung basierende Aufladung kann insbesondere mit einem Coronadraht und/oder einem Scorotron erfolgen. Ein Scorotron, auch Corona-Gitter (englisch: corona grid) genannt, hat sich als besonders geeignet erwiesen, da dieses eine Steuerung des elektrischen Beschleunigungsfeldes für die mittels Gasentladung erzeugten Ionen ermöglicht. Hierdurch ist eine präzisere Einstellung des gewünschten Oberflächenpotentials der aufzuladenden Pulverschicht möglich. Zur Erzeugung unterschiedlicher Polaritäten kann eine Pulver-Aufladeeinheit eine umpolbare Spannungsquelle aufweisen. Mittels der umpolbaren Spannungsquelle sind insbesondere ein Coronadraht und/oder ein Scorotron mit elektrischer Spannung unterschiedlicher Polarität beaufschlagbar.

Die Auftragseinheit ist zumindest bereichsweise, insbesondere selektiv, elektrostatisch aufladbar. Dies ermöglicht einen selektiven Pulverauftrag. Zur bereichsweisen, insbesondere selektiven, elektrostatischen Aufladung haben sich elektrofotographische Methoden als besonders geeignet erwiesen. Beispielsweise weist die Auftragseinheit eine fotoleitende Schicht, insbesondere eine Schicht aus Arsen(III)-Selenid (As₂Se₃), auf. Eine fotoleitende Schicht ist dielektrisch, wird bei Belichtung mit geeigneter Strahlung im belichteten Bereich jedoch leitend. Dies wird als fotoelektrischer Effekt bezeichnet. Die fotoleitende Schicht der Auftragseinheit wird im Folgenden auch als Fotoleiterschicht bezeichnet. Die fotoleitende Schicht kann durch Gasentladung, insbesondere mit Hilfe eines Coronadrahts und/oder eines Scorotrons, elektrostatisch aufgeladen werden. Durch gezielte Belichtung einzelner Bereiche der elektrostatisch aufgeladenen fotoleitenden Schicht können die belichteten Bereiche selektiv entladen werden. Die Belichtung erfolgt beispielsweise mittels einer Leuchtdiode. Bei einer fotoleitenden Schicht aus Arsen(III)-Selenid hat sich die Belichtung mit einer Wellenlänge von etwa 613 nm als besonders geeignet erwiesen.

Zur Aufnahme des elektrostatisch aufgeladenen Pulveranteils werden die Pulverpartikel des Pulveranteils durch die zumindest bereichsweise elektrostatisch aufgeladene Auftragseinheit elektrostatisch angezogen. Je nach relativer Polarität der Aufladung der Auftragseinheit und des Pulveranteils haften die Pulverpartikel in elektrostatisch aufgeladenen Bereichen oder in selektiv entladenen Bereichen der Auftragseinheit, insbesondere einer fotoleitenden Schicht der Auftragseinheit, an. Die elektrostatische Aufladung des Pulveranteils und die Aufnahme des elektrostatisch aufgeladenen Pulveranteils mittels der Auftragseinheit wird auch als Entwicklungsschritt bezeichnet.

Zur Unterstützung der Aufnahme des elektrostatisch aufgeladenen Pulveranteils weist die Auftragseinheit bevorzugt einen leitfähigen Grundkörper auf. Der Grundkörper kann beispielsweise aus Aluminium gefertigt sein. Der leitfähige Grundkörper der Auftragseinheit kann mit einer Aufnahmespannung beaufschlagt werden, die die Anziehung und das Anhaften des Pulveranteils begünstigt. Die Aufnahmespannung weist eine zu der Aufladung des Pulveranteils konträre Polarität auf. Die Auftragseinheit weist vorzugsweise eine umpolbare Auftragseinheit-Spannungsquelle auf. Mittels der umpolbaren Auftragseinheit-Spannungsquelle ist die Auftragseinheit, insbesondere deren Grundkörper, mit einer Aufnahmespannung mit einer zu der jeweiligen Aufladung der Pulveranteile konträren Polarität beaufschlagbar. Größe und Polarität der Aufnahmespannung sind gezielt an den aufzunehmenden Pulveranteil, insbesondere an eine Masse der Pulverpartikel und/oder deren elektrostatische Aufladung, anpassbar.

Der mittels der Auftragseinheit aufgenommene Pulveranteil wird auf eine Auftragsfläche übertragen. Das Übertragen auf die Auftragsfläche umfasst insbesondere einen Transfer der Auftragseinheit mit dem anhaftenden Pulveranteil in einen Bauraum und ein Ablegen des Pulveranteils auf die Auftragsfläche. Das Übertragen des Pulveranteils, insbesondere das Ablegen des Pulveranteils, auf die Auftragsfläche wird auch als Druckschritt bezeichnet. Die Auftragsfläche ist diejenige Fläche, auf die der Pulveranteil zur Erzeugung der jeweiligen Bauteil-Schicht aufzutragen ist. Für die erste Bauteil-Schicht kann dies insbesondere eine Bauplattform des Bauraums und/oder ein Substrat, auf welchem das Bauteil erzeugt werden soll, sein. Für weitere Bauteil-Schichten wird die Auftragsfläche durch die zuvor erzeugte Bauteil-Schicht gebildet.

Für den Transfer in den Bauraum kann die Auftragseinheit verlagerbar sein, insbesondere translatorisch verlagerbar sein. Bevorzugt ist die Auftragseinheit in mindestens zwei translatorischen Freiheitsgraden verlagerbar, insbesondere in Richtung einer Oberflächennormalen der Auftragsfläche und in eine Richtung senkrecht hierzu. Dies ermöglicht eine einfache und präzise Verlagerung der Auftragseinheit mit dem daran anhaftenden Pulveranteil in den Bauraum und eine einfache und präzise Zustellung relativ zu der Auftragsfläche. Die Positionierung der Auftragseinheit in Richtung der Oberflächennormalen der Auftragsfläche kann insbesondere abhängig von einer bereits erzeugten Bauteilhöhe erfolgen. Bevorzugt ist ein Abstand der Auftragseinheit zu der Auftragsfläche unabhängig von bereits erzeugten Bauteil-Schichten einstellbar. Zur Verlagerung kann die Auftragseinheit beispielsweise an einem Positioniersystem angeordnet sein. Als geeignet hat sich beispielsweise eine Linearachse und ein Präzisionshubtisch für die translatorische Bewegung und Zustellung relativ zu dem Bauraum bzw. zu der Auftragsfläche erwiesen.

Bevorzugt wird das Anhaften des Pulveranteils an der Auftragseinheit insbesondere während des Transfers in den Bauraum durch eine an die Auftragseinheit, insbesondere deren Grundkörper, angelegte Haltespannung unterstützt. Die Haltespannung kann insbesondere der Aufnahmespannung entsprechen. Die Haltespannung ist beispielsweise mit Hilfe der Auftragseinheit-Spannungsquelle erzeugbar.

Bevorzugt ist die Auftragseinheit, insbesondere deren Grundkörper, mit einer Ablegespannung beaufschlagbar. Die Ablegespannung weist besonders bevorzugt die gleiche Polarität auf wie die elektrostatische Aufladung des zu übertragenden Pulveranteils. Die Ablegespannung unterstützt ein Ablegen des Pulveranteils auf die Auftragsfläche. Die Ablegespannung kann beispielsweise mittels der Auftragseinheit-Spannungsquelle erzeugt werden. Zum Ablegen des Pulveranteils kann die Auftragseinheit-Spannungsquelle vorteilhafterweise umgepolt werden, um von einer Haltespannung zu der Ablegespannung umzuschalten.

Der auf die Auftragsfläche übertragene Pulveranteil wird zur Erzeugung der jeweiligen Bauteil-Schicht bevorzugt verfestigt. Beispielsweise kann der aufgetragene Pulveranteil thermisch verfestigt werden. Hierzu kann der Pulveranteil oder eine Komponente des Pulveranteils, beispielsweise ein Binder, aufgeschmolzen werden. Die thermische Verfestigung eignet sich besonders bei der Verarbeitung von Polymerpulvern. Zum Aufschmelzen kann der Bauraum beheizt werden, insbesondere mittels Heizstrahlen und/oder Lasern. Ein Aufschmelzen des Pulverbestandteils oder zumindest eines Bestandteils hiervon kann auch selektiv, beispielsweise durch Elektronenstrahlschmelzen und/oder selektives Lasersintern erfolgen. Die Verfestigung kann auch mit alternativen Methoden, beispielsweise mittels Binder-Jetting, erfolgen. Dies ermöglicht ein Verfestigen ohne Aufschmelzen des Pulvers, was insbesondere bei hochschmelzenden Pulvern, beispielsweise bei metallischen und/oder keramischen Pulvern, vorteilhaft ist.

Durch die schichtweise Erzeugung der Bauteil-Schichten kann das Bauteil insgesamt fertiggestellt werden. Nach der schichtweisen Erzeugung der Bauteil-Schichten können jedoch auch weitere Fertigungsschritte, insbesondere Nachbearbeitungsschritte, vorgesehen sein. Beispielsweise kann durch die schichtweise Erzeugung der Bauteil-Schichten ein Grünteil erzeugt werden, aus dem durch geeignete Nachbearbeitungsschritte das Bauteil fertiggestellt wird. Insbesondere für den Fall, dass die aufgetragenen Pulveranteile nicht oder nicht vollständig verfestigt werden, kann nach der schichtweisen Erzeugung der Bauteil-Schichten in einem Nachbearbeitungsschritt ein weiteres Verfestigen der Bauteil-Schichten zur Fertigstellung des Bauteils erfolgen. Beispielsweise kann ein zuvor erzeugtes Grünteil entbindert und/oder gesintert werden.

Nach dem Auftrag eines Pulveranteils werden eventuell noch an der Auftragseinheit, insbesondere deren fotoleitenden Schicht, vorhandene elektrostatische Ladungen gelöscht. Hierzu kann die fotoleitende Schicht der Auftragseinheit vollflächig belichtet werden.

Gemäß einem bevorzugten Aspekt des Verfahrens werden die zur Erzeugung aufeinanderfolgender Bauteil-Schichten aufzutragenden Pulveranteile mit alternierender Polarität elektrostatisch aufgeladen. Die alternierende elektrostatische Aufladung der Pulveranteile von aufeinanderfolgenden Bauteil-Schichten führt zu einem besonders vorteilhaften Auftragsverhalten. Durch die wechselseitige elektrostatische Anziehung der Schichten ist der Pulverauftrag begünstigt. Die erzeugten Bauteil-Schichten sind besonders stabil. Ladungsakkumulationen sind effektiv vermieden.

Es ist auch möglich, mehrere Bauteilschichten zu erzeugen, bevor die Polarität der aufzutragenden Pulveranteile geändert wird. Es hat sich herausgestellt, dass eine Akkumulation der Ladung im Bauteil auch durch eine Erhöhung einer Ablegespannung kompensiert werden kann. Die Erhöhung der Ablegespannung ist insbesondere möglich, bis die Durchschlagsfestigkeit bereits erzeugter Bauteilschichten und eines Mediums, insbesondere von Luft, im Spalt zwischen oberster Bauteilschicht (Auftragsfläche) und Auftragseinheit erreicht wird. Bei einem beispielhaften Luftspalt mit Spaltmaß 1 mm liegt die maximale Spannungsdifferenz beispielsweise etwa bei ±3000 V.

Werden mehrere Bauteilschichten mit Pulvern gleicher Polarität erzeugt, erhöht sich der Betrag des Oberflächenpotentials der Auftragsfläche. Die Erfinder haben erkannt, dass bis zu einem Grenz-Oberflächenpotential der Auftragsfläche gute Ablegeergebnisse mit unveränderter Polarität des aufzutragenden Pulveranteils erzielt werden können. Überschreitet der Betrag des Oberflächenpotentials der Auftragsfläche das Grenz-Oberflächenpotential kann die Polarität des nächsten aufzutragenden Pulveranteils geändert werden. Ein geeignetes Grenz-Oberflächenpotential liegt beispielsweise bei etwa 1000 V. Hierdurch kann die Zahl der Bauteilschichten, die sukzessive mit gleicher Polarität aufgetragen werden erhöht werden, beispielsweise auf 2 bis 5 Bauteilschichten.

Gemäß einem bevorzugten Aspekt des Verfahrens wird ein Oberflächenpotential der Auftragsfläche gemessen, um die Polarität des als nächstes aufzutragenden Pulveranteils zu bestimmen. Durch die Messung kann zuverlässig die Polarität des nächsten aufzutragenden Pulveranteils bestimmt werden. Beispielsweise kann der nächste Pulveranteil mit unterschiedlicher Polarität aufgeladen werden. Es ist auch möglich, einen Betrag des gemessenen Oberflächenpotentials mit einem Grenz-Oberflächenpotential zu vergleichen. Bei einem Überschreiten des Grenz-Oberflächenpotentials kann eine Änderung der Polarität der aufzutragenden Pulveranteile erfolgen. Es ist auch möglich, die Polarität des aufzutragenden Pulveranteils zu ändern, wenn anderenfalls ein Überschreiten des Grenz-Oberflächenpotentials droht.

Gemäß einem bevorzugten Aspekt des Verfahrens erfolgt das Aufnehmen und/oder Übertragen des elektrostatisch aufgeladenen Pulveranteils mittels der Auftragseinheit berührungslos. Durch den berührungslosen Auftragsprozess wird eine Verschmutzung und/oder Beschädigung der Auftragseinheit, insbesondere deren Fotoleiterschicht, zuverlässig vermieden. Insbesondere ist das Risiko eines Anhaftens von im Bauraum aufgeschmolzenen Pulveranteilen an der Auftragseinheit verringert. Der berührungslose Übertrag, insbesondere das berührungslose Ablegen, des Pulveranteils auf der Auftragsfläche ist durch die erfindungsgemäß verminderte Ladungsakkumulation begünstigt. Dies gilt insbesondere bei Aufladung der zur Erzeugung aufeinanderfolgender Bauteil-Schichten aufzutragenden Pulveranteile mit alternierender Polarität, da deren Anziehung den Übertrag auf die Auftragsfläche unterstützt.

Gemäß einem bevorzugten Aspekt des Verfahrens wird der Pulveranteil an der Auftragseinheit vorgeheizt. Das Vorheizen des Pulveranteils ermöglicht eine Anpassung der Temperatur des Pulveranteils an die Temperatur im Bauraum. Thermische Schocks sind vermieden. Dies vermindert nachteilige Effekte, beispielsweise thermischen Spannungen in dem zu fertigenden Bauteil. Insbesondere bei der Verarbeitung von Polymerpulvern sind eine vorzeitige partielle Kristallisation des Pulvers innerhalb des zu fertigen Bauteils und ein dadurch ausgelöster Bauteilverzug, das sogenannte Curling, vermieden.

Das Vorheizen des Pulveranteils an der Auftragseinheit kann insbesondere mittels einer Temperiereinheit der Auftragseinheit erfolgen. Die Temperiereinheit der Auftragseinheit ermöglicht ein Vorheizen des Pulvers während des Transfers in den Bauraum unabhängig von weiteren Komponenten der Fertigungsvorrichtung. Geeignete Temperiereinheiten können beispielsweise Fluidkanäle für ein Wärmeübertragungsfluid, insbesondere ein Wärmeübertragungsöl, aufweisen. Die Fluidkanäle sind beispielsweise in einem Grundkörper der Auftragseinheit ausgebildet und verlaufen bevorzugt mäandrierend. Die Fluidkanäle sind besonders bevorzugt derart angeordnet, dass diese ein gleichmäßiges Erwärmen der Auftragseinheit, insbesondere einer fotoleitenden Schicht der Auftragseinheit, ermöglichen. Die Temperiereinheit weist bevorzugt ein Temperiergerät zum Aufwärmen des Wärmeübertragungsfluids auf eine gewünschte Temperatur und/oder eine Pumpe zum Umpumpen des Wärmeübertragungsfluids in den Fluidkanälen auf. Zusätzlich oder alternativ kann die Temperiereinheit Heizdrähte und/oder Peltier-Elemente aufweisen.

Das Vorheizen des aufzutragenden Pulveranteils an der Auftragseinheit hat zudem den Vorteil, dass ein Abkühlen der obersten Bauteilschicht im Bauraum vermindert, insbesondere vermieden, ist. Zudem sind Effekte, die sich beim Pulverauftrag durch eine kurzzeitige Abschattung von Heizeinrichtungen des Bauraums, beispielsweise Infrarotstrahlern, ergeben können, vermindert.

Das Vorheizen des aufzutragenden Pulveranteils an der Auftragseinheit hat weiterhin den Vorteil, dass jeweils nur der aufzutragende Pulveranteil vorgeheizt wird. Im Vergleich zu rakel- oder rollerbasierten Beschichtersystemen kann daher auf ein langwieriges, teils mehrere Stunden dauerndes, Aufheizen der Anlage verzichtet werden. Insbesondere muss kein Aufheizen sämtlichen bereitgestellten Pulvers, beispielsweise in einem Pulverbett, erfolgen. Dies erhöht die Effizienz des Prozesses.

Eine Aufheiztemperatur, auf die die Auftragseinheit zum Vorheizen des Pulveranteils aufgeheizt wird, kann bevorzugt abhängig von der Menge und der Materialzusammensetzung des aufzutragenden Pulvers gewählt werden. Insbesondere für Polymerpulver, beispielsweise teilkristalline Polymerpulver, hat sich eine Aufheiztemperatur als praktikabel erwiesen, die
1 °C bis 5 °C oberhalb einer Temperatur T liegt, auf die der Pulveranteil vorgeheizt werden soll. Im Bauraum kann ein weiteres Aufheizen des Pulveranteils, beispielsweise mittels Heizstrahlung und/oder Lasern, erfolgen.

Gemäß einem bevorzugten Aspekt des Verfahrens wird der Pulveranteil an der Auftragseinheit auf eine Temperatur T vorgeheizt, für die gilt:
TS - ΔT ≤ T < TS, wobei TS eine Schmelztemperatur, insbesondere die Onset-Schmelztemperatur, des Pulveranteils ist und ΔT 30 °C, insbesondere 15 °C, insbesondere 10 °C, insbesondere 5 °C, beträgt. Der Pulveranteil wird an der Auftragseinheit auf eine Temperatur knapp unterhalb der Schmelztemperatur TS aufgeheizt. Als Schmelztemperatur TS des Pulveranteils wird hier und im Folgenden die niedrigste Temperatur verstanden, bei der zumindest ein Bestandteil des Pulveranteils zu schmelzen beginnt. Durch das Vorheizen unterhalb der Schmelztemperatur ist gewährleistet, dass der Pulveranteil und dessen Bestandteile nicht an der Auftragseinheit aufschmelzen. Eine Verschmutzung und/oder Beschädigung der Auftragseinheiten durch Schmelzrückstände ist vermieden. Das Vorheizen auf knapp unterhalb der Schmelztemperatur ermöglicht zudem eine weitgehende Anpassung der Pulvertemperatur an die im Bauraum herrschenden Temperaturen. Nachteilige thermische Effekte sind zuverlässig vermieden.

Die Schmelztemperatur TS kann insbesondere eine Onset-Schmelztemperatur des Pulveranteils sein. Hierdurch ist ein Aufschmelzen des Pulveranteils an der Auftragseinheit zuverlässig vermieden. Die Onset-Schmelztemperatur ist die Temperatur, bei der beim Erwärmen des Pulvermaterials ein Aufschmelzen des Pulvermaterials einsetzt. Die Onset-Schmelztemperatur kann insbesondere mittels dynamischer Differenzkalorimetrie (Engl.: differential scanning calorimetry, kurz DSC) bestimmt werden.

Gemäß einem bevorzugten Aspekt des Verfahrens wird der Pulveranteil an der Auftragseinheit auf eine Temperatur T vorgeheizt, für die gilt:
TR - δT < T, wobei TR eine Rekristallisationstemperatur, insbesondere die Onset-Rekristallisationstemperatur, des Pulveranteils ist und δT 20 °C, insbesondere 15 °C, insbesondere 10 °C, insbesondere 5 °C, insbesondere
0 °C, beträgt. Dies hat insbesondere für (teil-)kristalline Pulvermaterialien, insbesondere teilkristalline Polymere, den Vorteil, dass eine Rekristallisation des Pulveranteils und damit ein Verzug des Baumaterials während des Auftragsprozesses vermieden sind. Bevorzugt erfolgt das Vorheizen auf eine Temperatur T oberhalb der der Rekristallisationstemperatur TR, insbesondere der Onset-Rekristallisationstemperatur (δT = 0 °C). Es hat sich jedoch gezeigt, dass auch ein Vorheizen auf Temperaturen T geringfügig unterhalb der Rekristallisationstemperatur, insbesondere der Onset-Rekristallisationstemperatur (δT > 0 °C), eine Rekristallisation ausreichend zuverlässig verhindern.

Die Rekristallisationstemperatur TR ist bevorzugt die Onset-Rekristallisationstemperatur. Dadurch ist eine Rekristallisation des Pulvermaterials besonders zuverlässig vermieden. Die Onset-Rekristallisationstemperatur ist die Temperatur, bei der beim Abkühlen des Pulvermaterials eine Rekristallisation des Pulvermaterials einsetzt. Die Onset-Rekristallisationstemperatur kann insbesondere mittels dynamischer Differenzkalorimetrie (Engl.: differential scanning calorimetry, kurz DSC) bestimmt werden.

Bevorzugt wird der Pulveranteil an der Auftragseinheit auf eine Temperatur T vorgeheizt, für die gilt: TR - δT < T < TS, wobei δT 20 °C, insbesondere 15 °C, insbesondere 10 °C, insbesondere 5 °C, bevorzugt 0 °C, beträgt. Der Temperaturbereich zwischen der Rekristallisationstemperatur TR, insbesondere der Onset-Rekristallisationstemperatur, und der Schmelztemperatur TS, insbesondere der Onset-Schmelztemperatur, wird auch als quasi-isothermes Prozessfenster bezeichnet. Dieser Temperaturbereich hat sich als besonders vorteilhaft für die Verarbeitung (teil-)kristalliner Materialien, insbesondere teilkristalliner Polymere, erwiesen. Negative Auswirkungen der Rekristallisation, beispielsweise ein Bauteilverzug, und ein Aufschmelzen des Pulveranteils an der Auftragseinheit sind zuverlässig vermieden.

Das quasi-isotherme Prozessfenster ist stark werkstoffabhängig. Für Polyamid 12 (PA12) liegt dieses beispielsweise zwischen etwa 158 °C und etwa 181 °C. Für Polyamid 11 (PA11) liegt das quasi-isotherme Prozessfenster beispielsweise zwischen etwa 164 °C und etwa 199 °C. Zusätzlich kann das quasi-isotherme Prozessfenster aufgrund unterschiedlicher Additivierungen, beispielsweise mit Fließhilfsmitteln und/oder optischen Streupartikeln, und/oder Ausgangsmaterialien Abweichungen aufweisen. Dies kann beispielsweise zu herstellerabhängigen Abweichungen des quasi-isothermen Prozessfensters führen. Bevorzugt kann das quasi-isotherme Prozessfenster durch eine Kalibriermessung, insbesondere mittels dynamischer Differenzkalorimetrie (Engl.: differential scanning calorimetry, kurz DSC), vorab bestimmt werden.

Gemäß einem bevorzugten Aspekt des Verfahrens wird die Auftragsfläche, insbesondere ein gesamter Bauraum, auf eine Temperatur T2 vorgeheizt wird, für die gilt: TR < T2, insbesondere TR < T2 < TS. Bevorzugt wird der Bauraum während des Auftragens aller Pulveranteile auf einer Temperatur T2 gehalten, die innerhalb des quasi-isothermen Prozessfensters liegt. Die Temperatur T2 entspricht bevorzugt im Wesentlichen der Temperatur T, auf welche der Pulveranteil an der Auftragseinheit vorgeheizt wird. Ein Temperaturschock während des Pulverauftrags ist vermieden. Insbesondere kann ein Abkühlprozess des zu fertigenden Bauteils gezielt gesteuert werden. Bevorzugt erfolgt ein Abkühlen unterhalb der Rekristallisationstemperatur TR, insbesondere unterhalb der Onset-Rekristallisationstemperatur, erst nach dem Auftragen aller Bauteil-schichten. Hierdurch ist eine vorzeitige Rekristallisation vermieden. Der Abkühlprozess kann kontrolliert erfolgen. Besonders vorteilhafterweise ermöglicht dies, die Kristallisation des Baumaterials und damit die Kristallinität, insbesondere die Größe entstehender Kristalle (sog. Sphärolithe) des zu fertigenden Bauteils gezielt zu beeinflussen. Dies erlaubt eine besonders präzise und gezielte Beeinflussung der mechanischen Eigenschaften des zu fertigenden Bauteils.

Gemäß einem bevorzugten Aspekt des Verfahrens wird die Auftragseinheit zum Übertragen des Pulveranteils auf die Auftragsfläche in Schwingung versetzt. Geeignet sind beispielsweise Sinus- , Rechteck- und/oder Dreiecksspannungen sowie Kombinationen hiervon. Die Anregungsfrequenz kann beispielsweise zwischen 100 Hz und 20 kHz betragen. Besonders geeignet sind Anregungsfrequenzen in den Frequenzbereichen 100 Hz bis 500 Hz, 1 kHz bis 2 kHz und/oder 10 kHz bis 18 kHz. Die Spitze-zu-Spitze-Spannung der Anregung kann beispielsweise zwischen 300 und 500 Volt betragen. Als besonders vorteilhaft hat sich die Anregung mittels einer Pulsfolge aus einem starken Vor-Puls und unregelmäßigen Folge-Pulsen mit kleinerer Amplitude erwiesen. Der Vor-Puls kann beispielsweise eine Spitze-zu-Spitze-Spannung von etwa 1.000 Volt aufweisen. Zur mechanischen Anregung, insbesondere zur Schwingungsanregung, können mehrere entsprechende Pulsfolgen aus starkem Vor-Puls und schwächeren Folge-Pulsen verwendet werden.

Als besonders geeignet haben sich periodische Anregungsmuster, insbesondere sinusoidale Anregungsmuster, mit einer Anregungsfrequenz im Bereich einer der Eigenfrequenzen der Auftragseinheit erwiesen. Bevorzugt entspricht die Anregungsfrequenz im Wesentlichen einer der Eigenfrequenzen der Auftragseinheit. Hierdurch können besonders große Beschleunigungen der Auftragseinheit erzielt werden, was die Überwindung der Van-der-Waals-Kräfte begünstigt.

Bevorzugt erfolgt die Anregung derart, dass die Auftragseinheit im Wesentlichen in Ablegerichtung beschleunigt wird. Die Beschleunigung in Ablegerichtung unterstützt die Ablage der Pulverpartikel. Im Gegensatz dazu kann eine Beschleunigung senkrecht zur Ablegerichtung zu einem seitlichen Versatz einzelner der abgelegten Pulverpartikel führen (sogenannte Fehldrucke, englisch: false prints). Starke Anregungsamplituden, insbesondere mit einer Eigenfrequenz der Auftragseinheit erfolgende periodische Anregungen, können zu starken Beschleunigungen in Ablegerichtung und/oder senkrecht hierzu führen. Hierdurch kann die Pulverübertragung erhöht werden bei gleichzeitiger Erhöhung der Fehldruckrate.

Besonders bevorzugt wird die mechanische Anregung, insbesondere eine periodische Anregung mit einer der Eigenfrequenzen der Auftragseinheit, mit einem elektrischen Transferfeld, insbesondere mit einer Ablegespannung, kombiniert. Es hat sich gezeigt, dass die Kombination aus mechanischer Anregung und elektrischem Transferfeld die Pulverablage besonders begünstigt. Zudem verringert das elektrische Transferfeld eine Fehldruckrate. Die Kombination aus mechanischer Anregung und elektrischem Transferfeld gewährleistet eine Pulverablage mit hoher Abdeckung der Ablagefläche bei gleichzeitig geringer Fehldruckrate. Beispielsweise erfolgen mechanische Anregung und Einschalten des elektrischen Transferfeldes im Wesentlichen zeitgleich.

Gemäß einem bevorzugten Aspekt des Verfahrens wird die Auftragseinheit mechanisch angeregt, nachdem das elektrische Transferfeld vollständig aufgebaut ist. Die mechanische Anregung erfolgt erst dann, wenn das elektrische Transferfeld vollständig aufgebaut ist. Bevorzugt erfolgt die mechanische Anregung unmittelbar, nachdem das Transferfeld vollständig aufgebaut ist. Insbesondere wird zunächst die Spannungsversorgung, insbesondere die Hochspannungsversorgung, für das elektrische Transferfeld aktiviert. Nach vollständigem Aufbau des elektrischen Transferfeldes wird dann die mechanische Anregung, insbesondere mindestens ein Piezoaktor, aktiviert. Hierdurch ist eine besonders präzise Pulverablage in Ablegerichtung gewährleistet. Beispielsweise können gängige Hochspannungsversorgungen geeignete Ablegespannungen (beispielsweise zwischen ± 500 V und ± 3000 V) innerhalb von etwa 0,1 s bis etwa 30 s aufbauen.

Die mechanische Anregung sollte dann erst nach Ablauf der jeweiligen zum Aufbau des Transferfeldes erforderlichen Zeit erfolgen.

Gemäß einem bevorzugten Aspekt des Verfahrens wird zum Übertragen des Pulveranteils auf die Auftragsfläche ein elektrisches Transferfeld zwischen der Auftragseinheit und einer Übertragungsstruktur erzeugt. Das elektrische Transferfeld gewährleistet eine besonders zielgerichtete und positionsgenaue Übertragung, insbesondere Ablage, des Pulveranteils auf der Auftragsfläche. Das elektrische Transferfeld wird bevorzugt zwischen einem leitenden Grundkörper der Auftragseinheit und einer geerdeten Übertragungsstruktur erzeugt. Hierzu kann die Auftragseinheit, insbesondere deren Grundkörper, mit einer Ablegespannung beaufschlagt werden.

Die Übertragungsstruktur ist bevorzugt geerdet. Die Übertragungsstruktur kann in Richtung einer Oberflächennormalen der Auftragsfläche zwischen der Auftragsfläche und der Auftragseinheit angeordnet sein. Bevorzugt kann die Übertragungsstruktur in Richtung der Oberflächennormalen der Auftragsfläche verlagerbar sein, um das elektrische Transferfeld unabhängig von einer Höhe der bereits erzeugten Bauteil-Schichten präzise einzustellen.

Bevorzugt weist die Übertragungsstruktur einen Übertragungsrahmen aus leitfähigem Material auf. Der Übertragungsrahmen kann beispielsweise aus rahmenförmig angeordneten Leitern, insbesondere Kupferstäben, ausgebildet sein. Bevorzugt weist der Übertragungsrahmen in Richtung senkrecht zu der Oberflächennormalen der Auftragsfläche eine größere Ausdehnung auf als die Auftragseinheit. Der Übertragungsrahmen weist bevorzugt in einer Ebene senkrecht zu der Oberflächennormalen der Auftragsfläche eine Ausdehnung auf, die die Ausdehnung der Auftragseinheit übersteigt, beispielsweise um 1 mm übersteigt. In Richtung senkrecht zu der Oberflächennormalen der Auftragsfläche ist der Übertragungsrahmen bevorzugt umfangseitig um die Auftragseinheit angeordnet. Die Übertragungsrahmen behindern den Übertrag des Pulveranteils nicht. Eine laterale Ablenkung des Pulvers bei der Ablage ist minimiert.

Gemäß einem bevorzugten Aspekt des Verfahrens werden mindestens zwei unterschiedliche Pulver bereitgestellt, wobei die mindestens zwei unterschiedlichen Pulver triboelektrisch mit zwei unterschiedlichen Polaritäten aufladbar sind. Die Verwendung derartiger Pulver erlaubt auf einfache Weise die Aufladung der Pulveranteile mit unterschiedlicher Polaritäten unter Verwendung des triboelektrischen Effekts. Beispielsweise kann eine zur Aufladung der Pulver dienende Pulver-Aufladeeinheit ein Magnetbürstensystem aufweisen. Hierdurch sind die jeweiligen Pulver mit unterschiedlicher Polarität elektrostatisch aufladbar. Zur Auftragung von mit unterschiedlicher Polarität aufgeladenen Pulveranteile kann auf verschiedene der bereitgestellten Pulver zurückgegriffen werden.

Die mindestens zwei Pulver können beispielsweise unterschiedliche Ladungssteuerungsstoffe aufweisen, die bei ansonsten gleichen Pulvereigenschaften zu unterschiedlichen Polaritäten bei der elektrostatischen Aufladung führen. Auf diese Weise ist eine Aufladung mit unterschiedlichen Polaritäten und ansonsten unveränderten Pulvereigenschaften möglich.

Im Folgenden werden besonders geeignete Pulver für die triboelektrische Aufladung sowie deren Herstellung beschrieben. Die Herstellung der Pulver sowie die entsprechende Pulverformulierung sind ein eigenständiger Aspekt der Erfindung, der insbesondere unabhängig von der Aufladung verschiedener Pulveranteile mit unterschiedlichen Polaritäten ist. Die Pulverformulierung weißt Polymerpartikel und Ladungssteuerungsstoffe auf. Geeignete Ladungssteuerungsstoffe sind insbesondere funktionalisierte Silikapartikel. Insbesondere sind die Polymerpartikel mit den Ladungssteuerungsstoffen, insbesondere den funktionalisierten Silikapartikeln, beschichtet. Bevorzugt besteht die Pulverformulierung aus mit funktionalisierten Silikapartikeln beschichteten Polymerpartikeln.

Zur Herstellung einer bevorzugten Pulverformulierung werden Polymerpartikel mit Silikapartikeln beschichtet, insbesondere trockenbeschichtet. Hierzu können beliebige für die Trockenbeschichtung geeignete Mischer eingesetzt werden, beispielsweise Schüttelmischer, insbesondere 3D-Schüttelmischer, Horizontal- und/oder Vertikalmischer, insbesondere mit unterschiedlichen Rührwerksgeometrien, Trommelmischer, Kubusmischer und/oder Zylindermischer. Dies gewährleistet eine hohe Flexibilität bei der Herstellung der Pulverformulierung. Zusätzlich können Mischhelfer, beispielsweise in Kugelform, verwendet werden. Die Mischhelfer können beispielsweise aus Glas und/oder Zirkonoxid bestehen, insbesondere Glaskugeln sein. Geeignete Glaskugeln können einen mittleren Durchmesser von 1,5 mm und ein mittleres Gewicht von 180 g haben. Mischhelfer begünstigen eine Desagglomeration der Silikapartikel und können nach dem Mischprozess durch Siebung einfach abgetrennt werden.

Die Polymerpartikel können aus beliebigen Polymeren bestehen. Die Pulverformulierung kann insbesondere kommerziell erhältliche Pulver umfassen, die mit den funktionalisierten Silikapartikeln beschichtet sind. Die Pulverformulierung und deren Herstellung eigenen sich in vorteilhafterweise zur Funktionalisierung beliebiger Polymerpulver für die triboelektrische Aufladung bei der additiven Fertigung. Beispielhafte Polymere sind Polypropylen (PP), Polyethylen (PE), Polylactid (PLA), Polybutylenterephthalat (PBT), Polyethyleneterephthalat (PET), Polymethylmethacrylat (PMMA), Polyamid (PA), Polycarbonat (PC), Polysterol (PS), Polyoxymethylen (POM), Polyetheretherketone (PEEK), Polyetherketon (PEK), Polyphenylensulfid (PPS), Polyethersulfon (PES), Acrylnitril-Butadien-Styrol (ABS) und/oder Acrylnitril-Butadien-StyrolCopolymere. Die Polymerpulver können insbesondere auch aus Mischungen, Blends und/oder Composite derartiger Polymere bestehen.

Die Polymerpartikel weisen bevorzugt eine Partikelgrößenverteilung im Bereich von 1 µm bis 200 µm auf.

Die funktionalisierten Silikapartikel weißen bevorzugt eine mittlere Partikelgröße zwischen 10 nm und 60 nm auf. Die funktionalisierten Silikapartikel dienen als Ladungssteuerungsstoff. Sie fungieren als Elektronenakzeptoren oder Elektronendonatoren und sorgen so als Teil der Pulverformulierung für eine gezielte Verschiebung des Ladungsspektrums. Ein weiterer Vorteil besteht darin, dass die funktionalisierten Silikapartikel als Fließhilfsmittel wirken, was die Materialzufuhr für den Pulverauftrag verbessert.

Zur Herstellung einer Pulverformulierung für die triboelektrische Aufladung mit negativer Polarität eignen sich insbesondere funktionalisierte Silikapartikel in Form von Hexamethyldisilazan (HMDS), Polydimethylsiloxan (PDMS) oder eine Mischung hieraus. Für die Herstellung einer Pulverformulierung für die triboelektrische Aufladung mit positiver Polarität haben sich insbesondere funktionalisierte Silikapartikel in Form von PDMS, Stickstoffverbindungungen -NR₂ und -NR₃ und/oder Mischungen hieraus als geeignet erwiesen. Geeignete funktionalisierte Silikapartikel sind kommerziell erhältlich, beispielsweise unter dem Handelsnamen "HDK" der Wacker Chemie AG. Für die negative Aufladung kann beispielsweise HDK H05TX eingesetzt werden. Für die positive Aufladung kann beispielsweise HDK H05TA eingesetzt werden.

Der Anteil der Ladungssteuerungsstoffe, insbesondere der funktionalisierten Silikapartikel, in der Pulverformulierung liegt insbesondere im Bereich zwischen 0,05 Gew.-% und 1 Gew.-% bezogen auf die Masse des Polymers. Für einen derartigen Anteil der Ladungssteuerungsstoffe resultiert eine besonders geeignete Verschiebung des Ladungsspektrums.

Wie die Erfinder herausgefunden haben, besteht ein besonderer Vorteil der triboelektrischen Aufladung in der homogenen, insbesondere vollständigen, Aufladung der Pulverpartikel aufgrund der Ladungstrennung. Anders als bei der Gasentladung, mittels welcher nur sehr dünne Pulverschichten aufladbar sind, können bei der triboelektrischen Aufladung größere Pulverschichten aufgeladen werden. Hierdurch kann eine Schichtdicke des mittels der Auftragseinheit aufgenommenen Pulveranteils erhöht werden. Dies ermöglicht die Ablage von Bauteilschichten mit größerer Schichtdicke und damit eine schnellere Fertigung. Beispielsweise können mittels der triboelektrischen Aufladung Schichtdicken des aufzutragenden Pulveranteils erzeugt werden, die zwischen etwa 1 bis etwa 5 mittleren Partikeldurchmessern der Pulverpartikel des Pulveranteils entsprechen. Je nach Partikeldurchmesser können beispielsweise Schichtdicken zwischen etwa 60 µm und etwa 300 µm erzeugt werden. Die Gasentladung erlaubt Schichtdicken von etwa 1 bis etwa 2 mittleren Partikeldurchmessern, also beispielsweise zwischen etwa 60 µm und etwa 120 µm.

Gemäß einem bevorzugten Aspekt des Verfahrens weist der mit der Auftragseinheit aufgenommene Pulveranteil senkrecht zur Auftragseinheit eine Schichtdicke auf, die größer ist als das Zweifache des mittleren Partikeldurchmessers der Pulverpartikel des Pulveranteils. Dies ermöglicht eine schnelle und effiziente Fertigung. Bevorzug liegt die Schichtdicke zwischen 2 und 5 mittleren Partikeldurchmessern. Die Aufladung des Pulveranteils kann hierzu insbesondere triboelektrisch erfolgen. Besonders bevorzugt werden mit unterschiedlicher Polarität triboelektrisch aufladbare Pulver bereitgestellt, um Bauteilschichten mit hoher Schichtdicke und unterschiedlicher Polarität auftragen und erzeugen zu können. Es ist auch möglich die Schichtdicke verschiedener Bauteilschichten, insbesondere verschiedener aufzutragender Pulveranteile unterschiedlich zu wählen. So kann beispielsweise in Bereichen mit feinen zu erzeugenden Bauteilstrukturen eine geringere Schichtdicke gewählt werden als in anderen Bereichen.

Beschrieben ist zudem ein additiv gefertigtes Bauteil. Das Bauteil wird mittels des zuvor beschriebenen Verfahrens hergestellt. Das Bauteil zeichnet sich insbesondere durch eine erhöhte Bauteildichte und eine geringe Porosität aus. Das Bauteil weist verbesserte mechanische Eigenschaften auf.

Das Bauteil ist insbesondere ein Multi-Material-Bauteil. Das Bauteil zeichnet sich insbesondere durch eine integrale bzw. einstückige Kombination unterschiedlicher Werkstoffe aus. Das Bauteil kann beispielsweise in unterschiedlichen Bereichen aus unterschiedlichen Werkstoffen, insbesondere aus unterschiedlichen Polymerwerkstoffen, bestehen. Es können insbesondere verschiedene kommerziell erhältliche Werkstoffe, insbesondere kommerziell erhältliche Polymerwerkstoffe, in dem Bauteil kombiniert sein. Besonders bevorzugt weist das Bauteil eine Kombination von Werkstoffen mit stark unterschiedlichen Eigenschaften auf, insbesondere mit stark unterschiedlichen mechanischen und/oder thermischen Eigenschaften, beispielsweise mit stark unterschiedlichen Schmelztemperaturen. Die thermischen und/oder mechanischen Eigenschaften des Bauteils sind gezielt, insbesondere lokal, einstellbar. Fügeverbindungen zwischen Bauteilkomponenten aus unterschiedlichen Werkstoffen sind nicht erforderlich.

Beispielsweise kann das Bauteil integral aus den Werkstoffen Polyamid 12 (PA12) und einem thermoplastischen Elastomer auf Urethanbasis (TPE-U). Ein derartiges Bauteil weist in Bereichen, in denen PA12 verarbeitet wurde, die Festigkeit und mechanische Belastbarkeit von PA12 auf. In Bereichen, in denen TPU verarbeitet wurde, weist das Bauteil die für Elastomere typischen Eigenschaften von TPU auf. Fügeverbindungen zwischen Bereichen aus TPU und PA12 sind nicht erforderlich.

Es ist eine weitere Aufgabe der Erfindung, eine Vorrichtung zur additiven Fertigung zu verbessern.

Diese Aufgabe ist gelöst durch eine Vorrichtung mit den in Anspruch 11 angegebenen Merkmalen. Die Vorrichtung weist mindestens ein Pulverreservoir zur Bevorratung mindestens eines Pulvers, mindestens eine Pulver-Aufladeeinheit zur elektrostatischen Aufladung von Pulveranteilen des mindestens einen Pulvers und mindestens eine zumindest bereichsweise elektrostatisch aufladbare Auftragseinheit zum Aufnehmen und zum Übertragen von elektrostatisch aufgeladenen Pulveranteilen auf eine Auftragsfläche auf. Die mindestens eine Pulver-Aufladeeinheit ist dazu ausgebildet, verschiedene Pulveranteile des mindestens einen Pulvers zur Erzeugung von Bauteil-Schichten mit unterschiedlicher Polarität elektrostatisch aufzuladen. Die Vorrichtung ermöglicht ein verbessertes additives Fertigungsverfahren insbesondere mithilfe des elektrofotografischen Pulverauftrags. Nachteilige Ladungsakkumulationen in dem zu fertigenden Bauteil sind vermieden. Die Vorrichtung weist insbesondere die in Bezug auf das Fertigungsverfahren beschriebenen Merkmale und Vorteile auf.

Die Auftragseinheit weist einen Aktor auf zur Erzeugung einer mechanischen Anregung, insbesondere einer Schwingungsanregung, der Auftragseinheit. Die mechanische Anregung unterstütz die zielgenaue und präzise Übertragung der Pulveranteile auf die Auftragsfläche. Ein unerwünschtes Anhaften der Pulveranteile an der Auftragseinheit ist vermieden. Bevorzugt ist der Aktor als Piezoaktor ausgebildet. Mithilfe eines Piezoaktors lassen sich besonders geeignete Anregungsmuster, insbesondere Schwingungsanregungen einfach und gezielt erzeugen. Die mechanische Anregung kann an den zu übertragenden Pulveranteil, insbesondere an die Masse der Pulverpartikel und/oder deren elektrostatische Aufladung, flexibel angepasst werden.

Die Funktionsweise der mindestens einen Pulver-Aufladeeinheit basiert insbesondere auf dem physikalischen Effekt der Gasentladung. Die mindestens eine Pulver-Aufladeeinheit weist beispielsweise einen Coronadraht oder ein Scorotron auf. Die mindestens eine Pulver-Aufladeeinheit kann zur Erzeugung unterschiedlicher Polaritäten eine umpolbare Spannungsquelle aufweisen.

Alternativ oder zusätzlich hierzu kann die mindestens eine Pulver-Aufladeeinheit den triboelektrischen Effekt nutzen. Beispielsweise kann die mindestens eine Pulver-Aufladeeinheit ein Magnetbürstensystem umfassen.

Die Vorrichtung weist bevorzugt eine Steuereinheit auf, die dazu ausgebildet ist, die Vorrichtung zur Durchführung des oben beschriebenen Fertigungsverfahrens anzusteuern. Insbesondere ist die Steuereinheit dazu ausgebildet, die Vorrichtung zur additiven Fertigung des Bauteils derart anzusteuern, dass mehrere Bauteil-Schichten des zu fertigenden Bauteils erzeugt werden, wobei zur Erzeugung einer Bauteil-Schicht mindestens ein Pulveranteil des mindestens einen Pulvers aufgetragen wird, wobei der Pulveranteil mittels der mindestens einen Pulver-Aufladeeinheit elektrostatisch aufgeladen wird, die mindestens eine Auftragseinheit zumindest bereichsweise elektrostatisch aufgeladen wird und der elektrostatisch aufgeladene Pulveranteil mittels der mindestens einen zumindest bereichsweise elektrostatisch aufgeladenen Auftragseinheit aufgenommen und auf die Auftragsfläche übertragen wird, wobei verschiedene zur Erzeugung der Bauteil-Schichten aufzutragende Pulveranteile mit unterschiedlicher Polarität elektrostatisch aufgeladen werden. Die Steuereinheit erlaubt eine vollautomatische Durchführung des Fertigungsverfahrens mithilfe der Vorrichtung. Die Steuereinheit kann weiter dazu ausgebildet sein, die oben beschriebenen vorteilhaften Verfahrensschritte durchzuführen.

Gemäß einem bevorzugten Aspekt der Vorrichtung weist die mindestens eine Auftragseinheit eine Temperiereinheit zum Vorheizen von Pulveranteilen an der Auftragseinheit auf. Hierdurch sind nachteilige thermische Effekte, insbesondere thermische Spannungen in dem zu erzeugenden Bauteilen, vermindert, insbesondere vermieden.

Gemäß einem weiteren bevorzugten Aspekt der Vorrichtung weist die Temperiereinheit Fluidkanäle für ein Wärmeübertragungsfluid auf, die in einem Grundkörper der Auftragseinheit ausgebildet sind. Die Fluidkanäle verlaufen insbesondere mäanderförmig in den Grundkörper. Die Fluidkanäle sind besonders bevorzugt derart angeordnet, dass ein gleichmäßiges Vorheizen von Pulveranteilen über eine gesamte Fläche der Auftragseinheit, insbesondere eine gesamte fotoleitende Schicht der Auftragseinheit, gewährleistet ist.

Die Temperiereinheit weist bevorzugt ein Temperiergerät zum Temperieren des Wärmeübertragungsfluids und/oder eine Pumpe zum Umpumpen des Wärmeübertragungsfluids auf. Die Verwendung von Fluidkanälen für ein Wärmeübertragungsfluid hat den Vorteil, dass ein Vorwärmen des Pulvers und bei Bedarf auch eine Kühlung der Auftragseinheit zum Schutz vor der im Bauraum herrschenden Temperatur möglich ist. Thermische Beschädigungen der Auftragseinheit, insbesondere deren fotoleitenden Schicht, sind vermieden.

Alternativ oder zusätzlich kann die Temperiereinheit auch Heizdrähte und/oder ein oder mehrere Peltierelemente aufweisen.

Gemäß einem weiteren bevorzugten Aspekt der Vorrichtung weist die Auftragseinheit einen leitfähigen Grundkörper auf, der an eine umpolbare Auftragseinheit-Spannungsquelle angeschlossen ist. Der leitfähige Grundkörper der Auftragseinheit ist mittels der umpolbaren Auftragseinheit-Spannungsquelle mit einer an die Polarität der elektrostatischen Aufladung des Pulveranteils angepasste Aufnahmespannung, Haltespannung und/oder Ablegespannung beaufschlagbar. Dies unterstützt die Aufnahme und Übertragung des Pulveranteils mittels der Auftragseinheit.

Gemäß einem weiteren bevorzugten Aspekt weist die Vorrichtung eine Übertragungsstruktur zur Erzeugung eines elektrischen Transferfelds zwischen der Auftragseinheit und der Übertragungsstruktur auf. Das elektrische Transferfeld unterstützt die Übertragung, insbesondere die Ablage, des Pulveranteils auf der Auftragsfläche. Hierdurch ist insbesondere eine positionsgenaue Ablage des Pulveranteils gewährleistet. Das elektrische Transferfeld ist insbesondere zwischen einem leitfähigen Grundkörper der Auftragseinheit und der Übertragungsstruktur ausgebildet. Hierfür kann der Grundkörper der Auftragseinheit mit einer Ablegespannung beaufschlagt werden. Bevorzugt ist die Übertragungsstruktur geerdet. Die Übertragungsstruktur weist insbesondere einen Übertragungsrahmen auf. Die Übertragungsstruktur weist insbesondere die in Bezug auf das Verfahren beschriebene Merkmale und Vorteile auf.

Weitere Vorteile und Details der Erfindung sind nachfolgend anhand der Zeichnungen näher erläutert. In diesen zeigen:
- Fig. 1: eine schematische Darstellung einer Vorrichtung zur additiven Fertigung eines Bauteils,
- Fig. 2: eine schematische Darstellung einer Auftragseinheit der Vorrichtung gemäß Fig. 1,
- Fig. 3: ein schematischer Verfahrensablauf für die additive Fertigung eines Bauteils, insbesondere unter Verwendung der Vorrichtung gemäß Fig. 1,
- Fig. 4: eine schematische Darstellung einer Aufladestation der Vorrichtung gemäß Fig. 1 bei der elektrostatischen Aufladung der Auftragseinheit,
- Fig. 5: eine schematische Darstellung einer Belichtungsstation der Vorrichtung gemäß Fig. 1 bei der selektiven Belichtung der Auftragseinheit,
- Fig. 6: eine schematische Darstellung einer Entwicklungsstation der Vorrichtung gemäß Fig. 1 bei der Aufladung eines Pulveranteils eines Pulvers für den elektrofotografischen Auftragsprozess,
- Fig. 7: die Entwicklungsstation gemäß Fig. 6 bei Aufnahme des elektrostatisch aufgeladenen Pulveranteils durch die Auftragseinheit,
- Fig. 8: eine schematische Darstellung einer Druckstation der Vorrichtung gemäß Fig. 1 bei der Übertragung eines Pulveranteils zur Erzeugung einer ersten Bauteil-Schicht des zu fertigenden Bauteils,
- Fig. 9: die Druckstation gemäß Fig. 8 nach der Ablage eines weiteren Pulveranteils zur Erzeugung einer weiteren Bauteil-Schicht des zu fertigenden Bauteils,
- Fig. 10: die Druckstation gemäß Fig. 8 nach der Ablage eines weiteren Pulveranteils eines unterschiedlichen Pulvers zur Fertigung einer weiteren Bauteil-Schicht des zu fertigenden Bauteils, und
- Fig. 11: eine schematische Darstellung eines weiteren Ausführungsbeispiels einer Entwicklungsstation für eine Vorrichtung zur additiven Fertigung eines Bauteils.

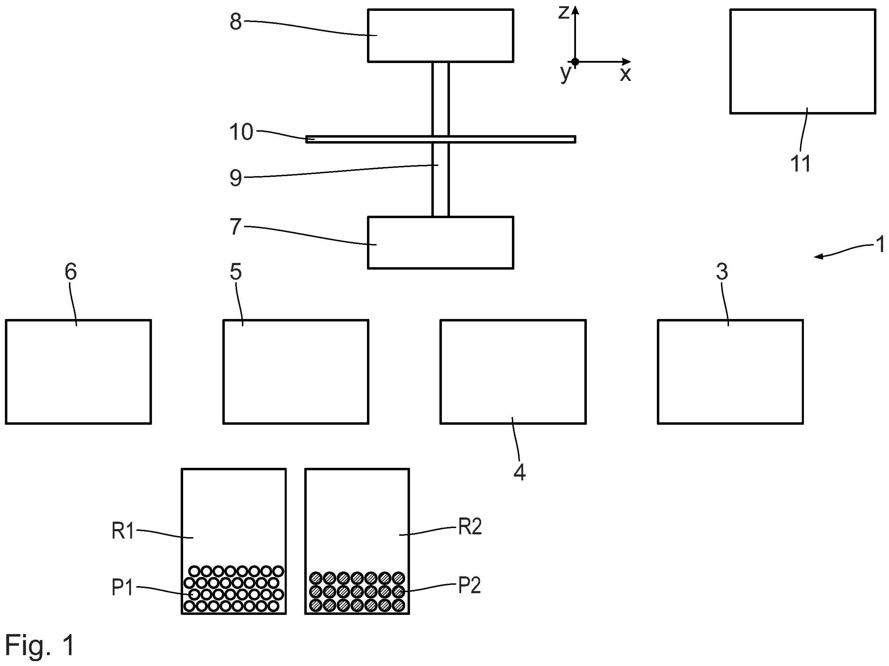

Anhand der Figuren 1 bis 10 wird nachfolgend ein erstes Ausführungsbeispiel einer Vorrichtung 1 zur additiven Fertigung eines Bauteils sowie eines additiven Fertigungsverfahrens 2 beschrieben.

Fig. 1 zeigt eine schematische Darstellung der Vorrichtung 1, die zur additiven Fertigung mittels elektrofotografischen Pulverauftrags eingerichtet ist. Die Vorrichtung 1 weist eine Aufladestation 3, eine Belichtungsstation 4, eine Entwicklungsstation 5 und eine Druckstation 6 auf. Eine Auftragseinheit 7 der Vorrichtung 1 ist zwischen den Stationen der Vorrichtung 1 verlagerbar. Die Aufladestation 3 dient zur elektrostatischen Aufladung der Auftragseinheit 7. An der Belichtungsstation 4 wir die Auftragseinheit 7 selektiv belichtet und damit selektiv entladen. Die Belichtungsstation 4 dient zudem zum Löschen verbleibender elektrostatischer Ladungen an der Auftragseinheit 7 nach Übertragung eines Pulveranteils in die Druckstation 6. An der Entwicklungsstation 5 wird ein Pulveranteil elektrostatisch aufgeladen und mittels der Auftragseinheit 7 aufgenommen. Der aufgenommene Pulveranteil wird mittels der Auftragseinheit 7 an die Druckstation 6 transportiert und dort auf eine Auftragsfläche abgelegt. Die Druckstation 6 bildet einen Bauraum für das schichtweise zu fertigende Bauteil aus.

Die Aufnahme des Pulveranteils durch die Auftragseinheit 7 in der Entwicklungsstation 5 und die Ablage des Pulveranteils in der Druckstation 6 erfolgen berührungslos.

Die Vorrichtung 1 eignet sich zur Multimaterialverarbeitung. Mithilfe der Vorrichtung 1 können unterschiedliche Materialien zu einem Bauteil kombiniert werden. Die zur Fertigung des Bauteils vorgesehenen Materialien werden in Form von Pulvern bereitgestellt. Hierzu weist die Vorrichtung 1 verschiedene Pulverreservoire auf. Das in Fig. 1 gezeigte Ausführungsbeispiel weist zwei Pulverreservoire R1, R2 für zwei unterschiedliche Pulver P1, P2 auf. Die Pulver P1, P2 sind bei dem dargestellten Ausführungsbeispiel Polymerpulver aus unterschiedlichen Polymermaterialien. Hierfür sind beliebige Polymere verwendbar. Besonders geeignet sind Polymere, die typischerweise in der additiven Fertigung eingesetzt werden, insbesondere Polyamid 12 (PA12), Polypropylen (PP), thermoplastische Elastomere (TPE), thermoplastische Elastomere auf Urethanbasis (TPU bzw TPE-U), High-Density-Polyethylen (PE-HD) und/oder Polystyrol (PS).

In anderen, nicht gezeigten Ausführungsbeispielen können auch keramische und/oder metallische Pulver verarbeitet werden. Polymer- und Keramikpulver sind für den elektrofotografischen Auftragsprozess direkt elektrostatisch aufladbar. Metallpulver werden beispielsweise mit einer dielektrischen Beschichtung versehen, um elektrostatisch aufladbar zu sein.

Zur Verlagerung der Auftragseinheit 7 weist die Vorrichtung 1 ein Positioniersystem 8 auf. Das Positioniersystem 8 ermöglicht eine Verlagerung der Auftragseinheit 7 zwischen den Stationen der Vorrichtung 1. Die Verlagerung erfolgt translatorisch in x-Richtung. Mittels des Positioniersystems 8 ist die Auftragseinheit 7 zudem in vertikaler Richtung (z-Richtung) zustellbar. Hierdurch ist ein Abstand der Auftragseinheit 7 zu dem an der Entwicklungsstation 5 aufzunehmenden Pulveranteil und zu einer Auftragsfläche an der Druckstation 6 präzise einstellbar. Die Verfahrgeschwindigkeit in x-Richtung kann beispielsweise zwischen 0,2 m/s und 1,0 m/s betragen. Die Verfahrgeschwindigkeit in z-Richtung beträgt beispielsweise zwischen etwa 10 mm/s und etwa 20 mm/s.

An der Druckstation 6 werden die übertragen Pulveranteile verfestigt. Insbesondere bei Polymerpulvern kann dies durch Aufschmelzen der Pulverpartikel erfolgen. An der Druckstation 6 herrschen daher regelmäßig hohe Temperaturen. Die Auftragseinheit 7 ist mit dem Positioniersystem 8 über einen Tragarm 9 verbunden. Der Tragarm 9 gewährleistet eine ausreichen-de Beabstandung des Positioniersystems 8 von dem Bauraum und den darin herrschenden Temperaturen. Der Tragarm 9 kann beispielsweise eine Länge von etwa 50 cm haben. Zur weiteren thermischen Abschirmung des Positioniersystems 8 ist zudem eine thermische Trennvorrichtung 10 zwischen der Auftragseinheit 7 und dem Positioniersystem 8 angeordnet. Die thermische Trennvorrichtung 10 ist beispielsweise eine Rollenabdeckung aus aluminisiertem Kevlar. Die thermische Trennvorrichtung 10 weist beispielsweise eine Dicke von 0,8 mm und eine Breite von 90 mm auf.

Das Positioniersystem 8 weist eine Linearachse für die Verlagerung in x-Richtung sowie einen Präzisionshubtisch für die Verlagerung in z-Richtung auf. Alternativ sind auch andere Positioniersysteme, beispielsweise spindel-, riemen- und/oder kettengetriebene Positioniersysteme möglich.

Die Vorrichtung 1 weist eine Steuereinheit 11 auf. Die Steuereinheit 11 steuert die Vorrichtung 1 zur Durchführung der additiven Fertigung an. Beispielsweise sind auf der Steuereinheit 11 Konstruktionsdaten, insbesondere CAD-Daten, für das zu fertigende Bauteil hinterlegt. Die Steuereinheit 11 steuert die Vorrichtung 1 an, um eine schichtweise Fertigung des Bauteils entsprechend der Konstruktionsdaten durchzuführen.

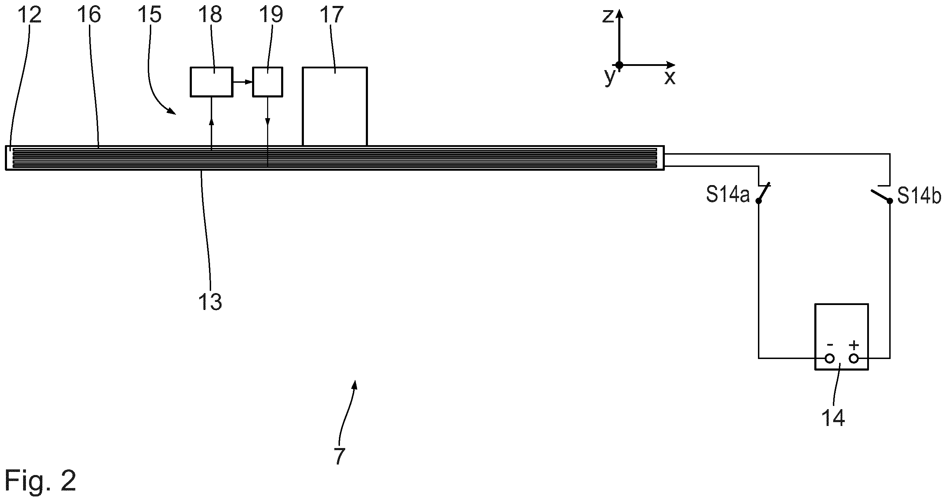

In Fig. 2 ist die Auftragseinheit 7 schematisch dargestellt. Die Auftragseinheit 7 weist einen Grundkörper 12 auf. Der Grundkörper 12 ist als Aluminiumplatte ausgeführt. Der Grundkörper 12 ist in der durch die x-Richtung und die y-Richtung gebildeten Ebene quadratisch. Er weist eine beispielhafte Seitenlänge von 100 mm auf. In z-Richtung weist der Grundkörper 12 eine Höhe von beispielsweise 5 mm auf.

Auf der Oberfläche des Grundkörpers 12, die zur Aufnahme des Pulveranteils dient, ist eine Fotoleiterschicht 13 aufgebracht. Die Fotoleiterschicht 13 ist aus Arsen(III)-Selenid (As₂Se₃). Sie weist eine beispielhafte Schichtdicke zwischen 80 µm und 120 µm auf. Die Fotoleiterschicht 13 ist dielektrisch, wird bei Anregung mit Licht aufgrund des fotoelektrischen Effekts aber im belichteten Bereich lokal leitend.

Der Grundkörper 12 ist an eine Auftragseinheit-Spannungsquelle 14 angeschlossen. Mithilfe der Auftragseinheit-Spannungsquelle 14 ist der Grundkörper 12 der Auftragseinheit 7 mit einer Hochspannung beaufschlagbar. Die Spannungsbeaufschlagung erfolgt in Form einer Aufnahme-, Halte- und/oder Ablagespannung, wie dies im Folgenden noch beschrieben wird. Mithilfe der Schalter S14a und S14b ist die Spannungsversorgung umpolbar. Die Schalter S14a, S14b sind durch die Steuereinheit 11 ansteuerbar.

Die Auftragseinheit 7 weist eine Temperiereinheit 15 auf. Die Temperiereinheit 15 dient zu einem Vorwärmen des an der Auftragseinheit 7 anhaftenden Pulveranteils vor Ablegen in der Druckstation 6. Durch das Vorwärmen des Pulveranteils erfolgt eine Anpassung der Temperatur des Pulvers an die im Bauraum der Druckstation 6 vorherrschenden Temperaturen. Hierdurch sind thermische Spannungen im zu erzeugenden Bauteil verringert. Insbesondere bei der Verarbeitung von Polymerpulvern wird der nachteilige Effekt des Curlings vermieden. Die Temperiereinheit 15 wärmt den Pulveranteil hierbei auf eine Temperatur knapp unterhalb dessen Schmelztemperatur auf. Hierdurch ist vermieden, dass Bestandteile des Pulveranteils an der Auftragseinheit 7 aufschmelzen und an dieser haften bleiben. Eine Verschmutzung und Beschädigung der Auftragseinheit durch aufgeschmolzene Pulverbestandteile ist vermieden.

Die Temperiereinheit 15 weist Fluidkanäle 16 auf, durch die ein Wärmeübertragungsfluid in Form eines Wärmeübertragungsöls gepumpt wird. Die Fluidkanäle 16 verlaufen in dem Grundkörper 12 mäanderförmig und decken die gesamte Fläche des Grundkörpers 12 in der x-y-Ebene gleichmäßig ab. Die Fluidkanäle 16 können beispielsweise einen Durchmesser von 4,2 mm haben. Das Wärmeübertragungsöl wird mittels eines Temperiergeräts 18 auf die gewünschte Temperatur gebracht und mithilfe einer Pumpe 19 in den Fluidkanälen 16 umgepumpt. In Fig. 2 ist ein Fluidkreislauf des Wärmeübertragungsöls mit dem Fluidkanal 16, dem Temperiergerät 18 und der Pumpe 19 durch Pfeile angedeutet.

Durch das in den Fluidkanälen 16 umgepumpte Wärmeübertragungsfluid wird die Auftragseinheit 7 auf eine gewünschte Temperatur gebracht. Hierdurch wird der mittels der Auftragseinheit 7 zu übertragende Pulveranteil vorgeheizt. Zudem verhindert die Temperiereinheit ein zu starkes Erwärmen der Auftragseinheit 7 im Bauraum. Eine Beschädigung der Fotoleiterschicht 13 aufgrund der im Bauraum herrschenden Temperaturen ist vermieden.

In anderen, nicht dargestellten Ausführungsbeispielen weist die Temperiereinheit mindesten ein Peltierelement und/oder Heizdrähte auf.

Die Auftragseinheit 7 weist einen Aktor 17 in Form eines Piezoaktors auf. Der Aktor 17 dient zu einer mechanischen Anregung der Auftragseinheit 7. Die mechanische Anregung vereinfacht die Ablage des Pulveranteils in der Druckstation 6. Durch die mechanische Anregung werden die Abstände zwischen einzelnen Pulverpartikeln zueinander vergrößert, was sowohl die interpartikulären Anziehungskräfte in Folge der van-der-Waals-Wechselwirkung als auch die elektrostatischen Anziehungskräfte reduziert. Die mechanische Anregung kann insbesondere durch Anlegen einer Sinus-, Rechteck- und/oder Dreieckspannung oder Kombinationen hiervon an den Piezoaktor 17 erfolgen. Die Spitze-zu-Spitze-Spannung beträgt dabei beispielsweise zwischen 300 Volt und 500 Volt. Die Anregungsfrequenz liegt beispielsweise in den Frequenzbereichen 100 Hz bis 500 Hz, 1 kHz bis 2 kHz und/oder 10 kHz bis 18 kHz. Als besonders geeignet hat sich die Anregung mit Pulsfolgen aus einem starken Vor-Puls und mehreren unregelmäßigen Folge-Pulsen kleinerer Amplitude erwiesen. Die Spitze-zu-Spitze-Spannung des Vor-Pulses kann beispielsweise etwa 1.000 Volt betragen.

In anderen, nicht dargestellten Ausführungsbeispielen ist der Aktor 17 nicht direkt auf der Auftragseinheit 7, sondern im Bereich des Tragarms 9 angeordnet. In wiederum anderen Ausführungsbeispielen kann mechanische Anregung auch durch eine starke Beschleunigung mithilfe des Positioniersystems 8 erfolgen.

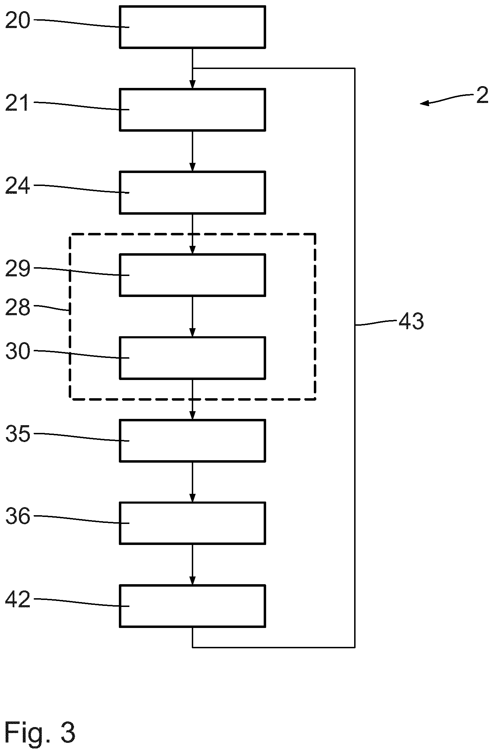

Die weitere Ausgestaltung der Vorrichtung 1 und deren Stationen 3 bis 6 werden im Folgenden im Rahmen der Beschreibung des Fertigungsverfahrens 2 näher erläutert. In Figur 3 ist ein schematischer Verfahrensablauf des Fertigungsverfahrens 2 gezeigt. Das Fertigungsverfahren 2 wird insbesondere mit der Vorrichtung 1 durchgeführt.

In einem Bereitstellungsschritt 20 werden die zur Fertigung des Bauteils benötigten Pulver, im vorliegenden Fall die Pulver P1, P2, bereitgestellt. Im Bereitstellungsschritt 20 können zudem Konstruktionsdaten für das zu fertigende Bauteil bereitgestellt werden, beispielsweise indem diese auf die Steuereinheit 11 übertragen werden.

An den Bereitstellungsschritt 20 schließt sich die schichtweise Fertigung des Bauteils durch Erzeugen mehrerer Bauteil-Schichten an. Zur Erzeugung einer Bauteil-Schicht wird mindestens ein Pulveranteil der Pulver P1, P2 aufgetragen und verfestigt. Die Erzeugung der Bauteil-Schichten wird durch die Steuereinheit 11 gesteuert und umfasst die im Folgenden beschriebenen Schritte.

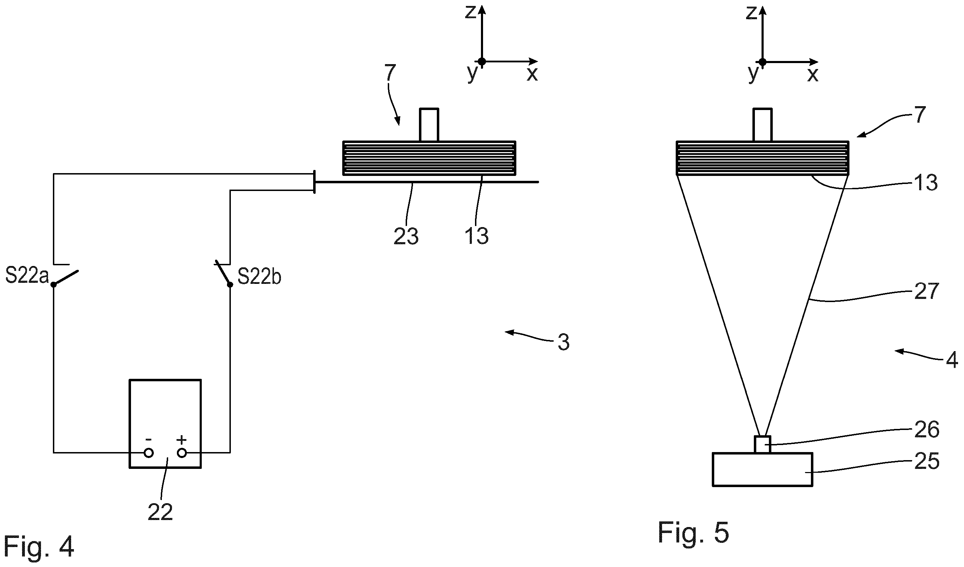

In einem Auftragseinheit-Aufladeschritt 21 wird die Fotoleiterschicht 13 der Auftragseinheit 7 elektrostatisch aufgeladen. Das Aufladen der Fotoleiterschicht 13 der Auftragseinheit 7 erfolgt in der Aufladestation 3, wie dies in Figur 4 beispielhaft gezeigt ist. Die Aufladestation 3 umfasst eine Auflade-Spannungsquelle 22, über die ein Coronadraht 23 mit Hochspannung versorgbar ist. Über die Schalter S22a, S22b, die über die Steuereinheit 11 ansteuerbar sind, kann die Polarität der Spannungsbeaufschlagung des Coronadrahts 23 eingestellt werden. Zur Aufladung der gesamten Fotoleiterschicht 13 ist der Coronadraht 23 entlang der y-Richtung verstellbar. Für die Fertigung der ersten Bauteil-Schicht wird der Coronadraht 23 mit dem Pluspol der Auflade-Spannungsquelle 22 verbunden. Die Fotoleiterschicht 13 wird hierdurch positiv aufgeladen, beispielsweise auf ein Potenzial von 600 Volt.

In anderen, nicht dargestellten Ausführungsbeispielen können anstatt des Coronadrahts 23 auch anders arbeitende Ladeeinheiten, insbesondere auf dem Prinzip der Gasentladung basierende Ladeeinheiten, verwendet werden. In einem vorteilhaften Ausführungsbeispiel wird zur Aufladung der Fotoleiterschicht 13 ein Scorotron verwendet.

An den Auftragseinheit-Aufladeschritt 21 schließt sich ein Belichtungsschritt 24 an. Der Belichtungsschritt 24 wird mithilfe der Belichtungsstation 4 durchgeführt, wie dies in Fig. 5 schematisch dargestellt ist. Die Belichtungsstation 4 weist eine Belichtungsvorrichtung 25 zur selektiven Belichtung der Fotoleiterschicht 13 auf. Zur Erzeugung der hierfür erforderlichen Strahlung 27 weist die Belichtungsvorrichtung 25 eine Leuchtdiode 26 auf. Mithilfe der Beleuchtungsvorrichtung 25 wird die Strahlung 27 selektiv auf zu belichtende Bereiche der Fotoleiterschicht 13 eingestrahlt. Die mit der Strahlung 27 bestrahlten Bereiche der Fotoleiterschicht 13 werden temporär leitend, sodass lokal die im Auftragseinheit-Aufladeschritt 21 erzeugte elektrostatische Ladung abfließt. Durch die selektive Bestrahlung wird die Fotoleiterschicht 13 der Auftragseinheit 7 selektiv entladen. Bei Verwendung einer Fotoleiterschicht 13 aus Arsen(III)-Selenid hat sich die Verwendung von Strahlung 27 mit einer Wellenlänge von 613 nm als besonders geeignet erwiesen. Die Belichtungszeit wird bevorzugt an die Höhe der Pulveraufladung angepasst. Beispielhafte Belichtungszeiten liegen zwischen 10 ms und 300 ms. Durch die selektive Bestrahlung und Entladung der Fotoleiterschicht 13 werden diejenigen Bereiche definiert, an welchen in einem späteren Entwicklungsschritt Pulveranteile anhaften und in den Bauraum der Druckstation 6 übertragen werden. Die selektive Belichtung legt somit eine Kontur des Bauteils in der zu erzeugenden Bauteil-Schicht fest.

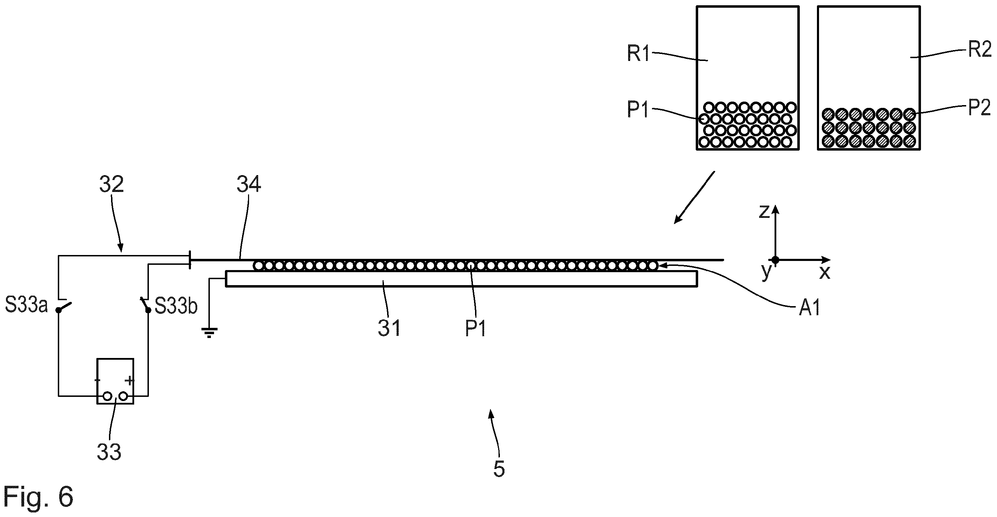

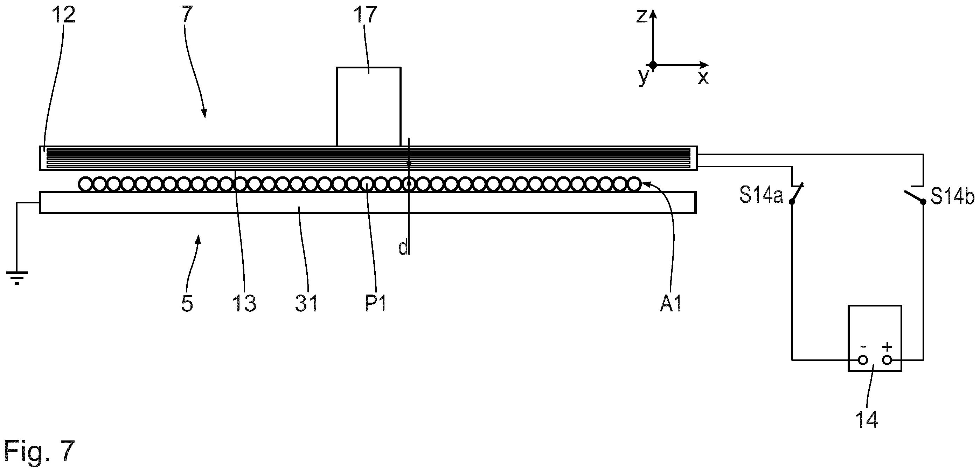

An der Entwicklungsstation 5 wird ein Entwicklungsschritt 28 durchgeführt. Der Entwicklungsschritt 28 gliedert sich in einen Pulver-Aufladeschritt 29 und einen Pulver-Aufnahmeschritt 30, die nachfolgend in Bezug auf die Figuren 6 bzw. 7 näher erläutert werden.

Die Entwicklungsstation 5 weist eine geerdete Basisfläche 31 auf. Aus den Pulverreservoir R1 ist ein Pulveranteil A1 des Pulvers P1 in Form einer Schicht der Pulverpartikel auf die Basisfläche 31 aufgebracht. Ein Pulveranteil A1 wird mithilfe einer Pulver-Aufladeeinrichtung 32 elektrostatisch aufgeladen. Die Pulver-Aufladeeinrichtung 32 weist eine Spannungsquelle 33 auf, die an einem Coronadraht 34 angeschlossen ist. Der Coronadraht 34 ist mithilfe der Spannungsquelle 33 mit einer Hochspannung beaufschlagbar. Mithilfe der Schalter S33a, S33b ist die Polarität der Spannungsbeaufschlagung des Coronadrahts 34 änderbar. Zur elektrostatischen Aufladung des Pulveranteils A1 wird der Coronadraht 34 in y-Richtung über die auf der Basisschicht 31 aufgetragene Pulverschicht geführt. Der Coronadraht 34 ist zudem in z-Richtung positionierbar, um eine optimale Anpassung an das verwendete Pulver P1, insbesondere die Größe der Pulverpartikel, zu gewährleisten. Abhängig von der Schalterstellung der Schalter S33a, S33b wird der Coronadraht 34 und damit der Pulveranteil A1 mit unterschiedlicher Polarität aufgeladen. Bei dem in Figur 6 gezeigten Pulver-Aufladeschritt 29 zur Fertigung der ersten Bauteil-Schicht wird das Pulver beispielsweise mit einer positiven Spannung aufgeladen. Das Pulver wird beispielsweise auf ein Potenzial zwischen 400 Volt und 1.000 Volt aufgeladen.

Der Pulver-Aufladeschritt 29 kann zeitlich parallel zu dem Auftragseinheit-Aufladeschritt 21 und/oder dem Belichtungsschritt 24 erfolgen.

Anstatt des Coronadrahts 34 können in anderen Ausführungsbeispielen auch andere Ladeeinheiten, insbesondere auf Gasentladung basierende Ladeeinheiten, verwendet werden. Anstatt des Coronadrahts 34 kann insbesondere ein Scorotron eingesetzt werden, wodurch eine präzisiere Einstellung des gewünschten Oberflächenpotenzials möglich ist.

Im Pulver-Aufnahmeschritt 30 wird der Pulveranteil A1 von der Auftragseinheit 7 aufgenommen. Hierfür wird die Auftragseinheit 7 in die Entwicklungsstation 5 verlagert. Der besseren Übersichtlichkeit halber ist in Fig. 7 die Pulver-Aufladeeinrichtung 32 der Entwicklungsstation 5 nicht gezeigt. Die Auftragseinheit 7 wird zudem in z-Richtung für die Aufnahme des Pulveranteils A1 zugestellt. Die Zustellung erfolgt derart, dass ein Abstand d zwischen der Fotoleiterschicht 13 der Auftragseinheit 7 und der Oberfläche des aufgeladenen Pulveranteils A1 verbleibt. Die Aufnahme des Pulveranteils A1 erfolgt berührungslos. Der Abstand d wird abhängig von der Masse der Pulverpartikel und deren elektrostatischer Aufladung gewählt. Der Abstand d kann beispielsweise zwischen 1 mm und 8 mm betragen.

Zur Aufnahme des Pulveranteils A1 wird der Grundkörper 12 der Auftragseinheit 7 mittels der Auftragseinheit-Spannungsquelle 14 mit einer Aufnahmespannung beaufschlagt. Die Aufnahmespannung weist eine der Aufladung der Pulveranteils A1 konträre Polarität auf und unterstützt somit die elektrostatische Anziehungskraft der Pulverpartikel. Vorliegend ist die Fotoleiterschicht 13 in den nicht belichteten Bereichen positiv aufgeladen. Auch der Pulveranteil A1 ist positiv aufgeladen. Die nicht belichteten Bereiche der Fotoleiterschicht 13 reduzieren die mithilfe der Aufnahmespannung erzeugte Anziehungskraft auf die Pulverpartikel lokal. Aufnahmespannung, elektrostatische Aufladung der Fotoleiterschicht 13 sowie elektrostatische Aufladung des Pulveranteils A1 sind derart aufeinander abgestimmt, dass nur Pulverpartikel des Pulveranteils A1 in zuvor belichteten und damit entladenen Bereichen der Fotoleiterschicht 13 angezogen werden und dort haften bleiben. Eine geeignete Aufnahmespannung kann abhängig von der Polarität beispielsweise zwischen -100 V und -300 V bzw. zwischen 100 V und 300 V betragen.

Eine Aufnahme des Pulveranteils, bei welchem Pulverpartikel in zuvor belichteten und entladenen Bereichen der Fotoleiterschicht 13 anhaften, wird als Weißschreiben oder englisch "Discharged Area Development" bezeichnet. Alternativ ist auch möglich, die Fotoleiterschicht 13 und den Pulveranteil A1 mit entgegengesetzter Polarität aufzuladen. Die aufgeladenen und nicht mittels der Belichtung entladenen Bereiche der Fotoleiterschicht 13 wirken dann auf die mit entgegengesetzter Polarität aufgeladenen Pulverpartikel anziehend. Gegebenenfalls haften die Pulverpartikel nur in den nicht belichteten Stellen an. Ein derartiges Vorgehen wird als Schwarzschreiben oder englisch "Charged Area Development" bezeichnet.

Nach Aufnahme des Pulveranteils A1 in den zuvor belichteten Bereichen der Fotoleiterschicht 13 erfolgt ein Transferschritt 35 zum Transferieren des Pulvers von der Entwicklungsstation 5 hin zu der Druckstation 6.

In dem Transferschritt 35 wird der Pulveranteil A1 mithilfe der Auftragseinheit 7 an die Druckstation 6 transportiert, indem die Auftragseinheit 7 in die Druckstation 6 verlagert wird. Während des Transfers von der Entwicklungsstation 5 in die Druckstation 6 wird der Grundkörper 12 der Auftragseinheit 7 mit einer der Aufnahmespannung entsprechenden Haltespannung beaufschlagt. Mithilfe der Temperiereinheit 15 wird der an der Auftragseinheit 7 anhaftende Pulveranteil A1 vorgeheizt. Das Vorheizen erfolgt auf eine Temperatur T, die knapp unterhalb der Schmelztemperatur TS des Pulveranteils A1 liegt, bevorzug auf eine Temperatur innerhalb des quasi-isothermen Prozessfensters. Hierdurch wird die Temperatur des zu übertragenden Pulveranteils A1 an die an der Druckstation 6 herrschende Temperatur angepasst.

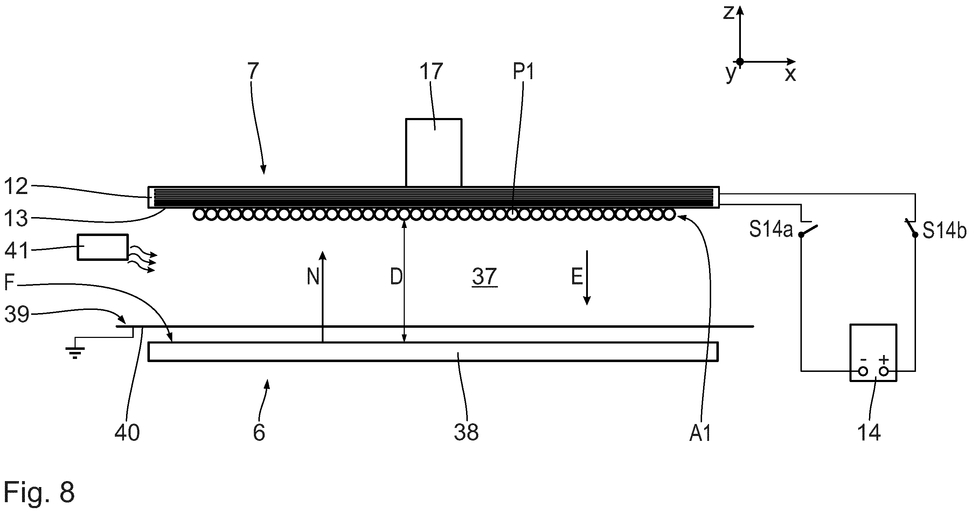

An der Druckstation 6 erfolgt ein Druckschritt 36. In dem Druckschritt 36 wird der Pulveranteil A1 mittels der Auftragseinheit 7 auf eine Auftragsfläche F übertragen. Hierzu wird der Pulveranteil A1 auf die Auftragsfläche F abgelegt. Die Druckstation 6 sowie der Druckschritt 36 werden im Folgenden mit Bezug auf Figur 8 näher erläutert.

Die Druckstation 6 bildet einen Bauraum 37 mit einer Bauplattform 38 aus. Bei der Fertigung der ersten Bauteil-Schicht bildet die der Auftragseinheit 7 zugewandte Oberfläche der Bauplattform 38 die Auftragsfläche F aus. Eine Oberflächennormale N der Auftragsfläche F ist parallel zu der z-Richtung orientiert.

Der Bauraum 37 kann mit Luft gefüllt sein oder ein Schutzgas aufweisen. Geeignete Schutzgase sind beispielsweise Stickstoff und/oder ein Edelgas, insbesondere Argon.

Die Druckstation 6 weist eine Übertragungsstruktur 39 auf. Die Übertragungsstruktur 39 weist einen Übertragungsrahmen aus vier rahmenförmig angeordnete Kupferstäben 40 auf. Die Kupferstäbe 40 sind zylindrisch ausgebildet und weisen beispielsweise einen Durchmesser von jeweils 0,8 mm auf. Die Kupferstäbe 40 sind an ihren Enden miteinander verschweißt und bilden somit einen quadratischen Übertragungsrahmen. Der Übertragungsrahmen weist eine Seitenlänge auf, die die Seitenlänge der Auftragseinheit 7, insbesondere deren Grundkörper 12, übersteigt. In der x-y-Ebene ist die Übertragungsstruktur 39 daher umfangseitig um die Auftragseinheit 7 angeordnet. Die Kupferstäbe 40 und damit die Übertragungsstruktur 39 sind geerdet.

Die Übertragungsstruktur 39 ist in Richtung der Oberflächennormalen N der Auftragsfläche F verlagerbar. Die Übertragungsstruktur 39 ist somit in z-Richtung verlagerbar.

Die Auftragseinheit 7 wird oberhalb der Auftragsfläche F positioniert und in z-Richtung zugestellt. Hierdurch wird ein Abstand D zwischen den an der Fotoleiterschicht 13 anhaftenden Pulverpartikel und der Auftragsfläche F eingestellt. Der Abstand D kann für die berührungslose Ablage der Pulverpartikel des Pulveranteils A1, insbesondere unter Berücksichtigung der Aufladung der Pulverpartikel und deren Masse, geeignet gewählt werden. Ein beispielhafter Abstand D beträgt zwischen 1 mm und 8 mm.

Die Übertragungsstruktur 39 ist mit den Kupferstäben 40 in Richtung der Oberflächennormalen N, d.h. in z-Richtung, zwischen der Auftragsfläche F und der Auftragseinheit 7 angeordnet. Die Übertragungsstruktur 39 wird in z-Richtung derart positioniert, dass ein Abstand zwischen den Kupferstäben 40 und der Auftragsfläche F im Wesentlichen dem Partikeldurchmesser der Pulverpartikel des Pulveranteils A1 entspricht.

Zur Ablage des Pulveranteils A1 wird die Spannungsbeaufschlagung des Grundkörpers 12 der Auftragseinheit 7 umgepolt. Der Grundkörper 12 wird daher mit einer der Polarität der Aufladung des Pulveranteils A1 entsprechenden Ablagespannung beaufschlagt. Zwischen dem spannungsbeaufschlagten Grundkörper 12 und der geerdeten Übertragungsstruktur 39 bildet sich ein elektrisches Feld E aus, das auch als Transferfeld bezeichnet wird. Mithilfe des Aktors 17 wird die Auftragseinheit 7 mechanisch angeregt, um interpartikuläre Anziehungskräfte zwischen den Pulverpartikeln und der Fotoleiterschicht 13 zu überwinden. Die Pulverpartikel des Pulveranteils A1 lösen sich von der Fotoleiterschicht 13 und werden entlang des Transferfeldes E auf der Auftragsfläche F abgelegt.

Der so auf die Auftragsfläche F aufgetragene Pulveranteil A1 wird verfestigt. Die in dem gezeigten Ausführungsbeispiel verwendeten Polymerpulver werden hierzu aufgeschmolzen, indem der Bauraum 37 auf eine Temperatur oberhalb der Schmelztemperatur TS des Pulvers P1 erwärmt wird. Die Druckstation 6 weist eine Heizeinrichtung 41 zum Aufheizen des Bauraums 37 auf. Die Heizeinrichtung 41 weist beispielsweise Heizstrahler und/oder Laser, insbesondere CO₂-Laser und/oder Thulium-Laser, auf.

In weiteren Ausführungsbeispielen weist die Druckstation Laser zum selektiven Aufschmelzen der aufgetragenen Pulveranteile auf. Die Laser können Teil der Heizeinrichtung sein. Insbesondere weist die Heizeinrichtung Heizstrahler zum Vorheizen des Pulvers und Laser zum selektiven Aufschmelzen des Pulvers auf. Dies ist besonders vorteilhaft für die Verarbeitung verschiedener Pulver mit stark unterschiedlichen Schmelztemperaturen. Im Falle hochschmelzender Pulver können auch jeweils Laser zum Vorheizen und Aufschmelzen des Pulvers vorhanden sein. Bei der Verarbeitung eines niedrigschmelzenden Pulvers und eines hochschmelzenden Pulvers kann der Heizstrahler zum Vorwärmen des niedrigschmelzenden Pulvers, ein erster Laser zum Vorwärmen des hochschmelzenden Pulvers und ein zweiter Laser zum homogenen Aufschmelzen der jeweiligen Pulver eingesetzt werden.

Keramische und/oder metallische Pulver weisen wesentlich höhere Schmelztemperaturen als Polymehrpulver auf. Für eine thermische Verfestigung sind entsprechend höhere Temperaturen erforderlich. Ein Verfestigen von metallischen und/oder keramischen Pulvern erfolgt daher regelmäßig durch selektiven Energieeintrag, beispielsweise durch selektives Laserstrahlsintern und/oder Elektronenstrahlschmelzen. Hierbei kann ein Vorwärmen der metallischen und/oder keramischen Pulver erfolgen. Da hierfür regelmäßig hohe Temperaturen, beispielsweise bis zu 600 °C, erforderlich sind, besteht das Risiko einer Beschädigung der Fotoleiterschicht.. Metallische und/oder keramische Pulver werden daher in vielen Fällen bei Raumtemperatur aufgetragen. Das Verfestigen erfolgt dann beispielsweise indem ein entsprechend höherer Energieeintrag zum selektiven Aufschmelzen eingestrahlt wird. Hierfür können höhere Laserintensitäten und/oder andere Wellenlängen vorteilhaft sein.

Ein Verfestigen der aufgetragenen Pulveranteile kann alternativ oder zusätzlich durch nicht-thermische Methoden, beispielsweise durch Binder-Jetting, erfolgen. Insbesondere beim Verfestigen durch Binder-Jetting wird ein Grünteil des zu fertigenden Bauteils additiv gefertigt, das in einem nachfolgenden Schritten entbindert und zu dem fertigen Bauteil gesintert wird.

Nach Auftragen des Pulveranteils A1 erfolgt ein Löschungsschritt 42. In dem Löschungsschritt 42 werden verbleibende Ladungen der Fotoleiterschicht 13 der Auftragseinheit 7 gelöscht, indem diese vollflächig mit der Strahlung 27 belichtet wird. Der Löschungsschritt 42 erfolgt mithilfe der Belichtungsstation 3. Zur Löschung der Ladungen können beispielsweise Belichtungszeiten von etwa 100 ms eingesetzt werden.

Der aufgetragene Pulveranteil A1 bildet eine erste Bauteil-Schicht B1. Zur Auftragung weiterer Bauteil-Schichten werden die vorgenannten Schritte wiederholt, wie dies in Fig. 3 anhand der Wiederholungsschleife 43 angedeutet ist. Bei dem Fertigungsverfahren 2 werden die zur Erzeugung aufeinanderfolgender Bauteil-Schichten verwendeten Pulveranteile mit unterschiedlicher Polarität elektrostatisch aufgeladen. Hierzu wird die Spannungsquelle 33 der Pulver-Aufladeeinheit 32 zur Aufladung der Pulveranteile für unterschiedliche Bauteil-Schichten mithilfe der Schalter S33a, S33b umgepolt. Entsprechend werden an den Grundkörper 12 der Auftragseinheit 7 die Aufnahmespannung, Haltespannung und Ablegespannung mit entsprechend angepasster Polarität angelegt. Hierzu wird Spannungsbeaufschlagung des Grundkörpers 12 mittels der Schalter S14a, S14b der Auftragseinheit-Spannungsquelle 14 bei der Fertigung aufeinanderfolgender Bauteil-Schichten entsprechend gesteuert. Bei der Auftragung der Pulveranteile wird die Fotoleiterschicht 13 der Auftragseinheit 7 jeweils mit der gleichen Polarität aufzuladen. Die alternierend aufgeladenen Pulveranteile werden dann mittels Schwarz- und Weißschreiben alternierend im Bereich geladener bzw. entladener Bereiche der Fotoleiterschicht 13 aufgenommen und gehalten. Dieses Vorgehen hat den Vorteil, dass gängige Fotoleiterschichten, die jeweils nur mit einer Polarität aufladbar sind, zur Auftragung von Pulveranteilen mit unterschiedlicher Polarität eingesetzt werden können.

Die alternierende Aufladung der Pulveranteile zur Erzeugung aufeinanderfolgender Bauteil-Schichten verhindert eine nachteilige Ladungsakkumulation in dem zu fertigenden Bauteil. Eine elektrostatische Abstoßung der Pulverpartikel ist reduziert. Vielmehr bewirkt die Aufladung der Pulveranteile mit alternierender Polarität, dass sich die Pulveranteile aufeinanderfolgender Bauteil-Schichten elektrostatisch anziehen. Dies erhöht die Stabilität der Bauteil-Schichten bei der Fertigung. Zudem ist eine Packungsdichte der Pulverpartikel bei der Fertigung erhöht. Das gefertigte Bauteil weist eine erhöhte Dichte und verbesserte mechanische Eigenschaften auf.

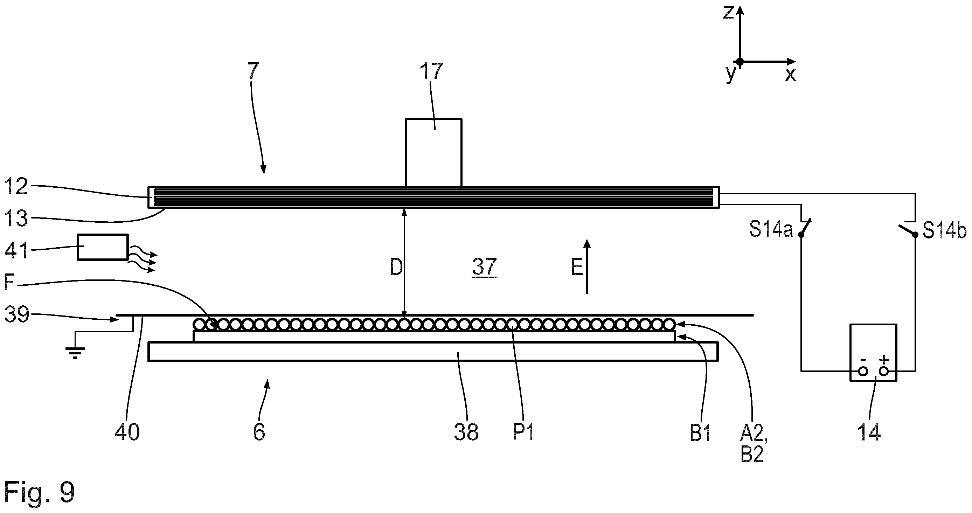

In Fig. 9 ist exemplarisch die Erzeugung einer weiteren Bauteil-Schicht B2 durch Auftragung eines Pulveranteils A2 gezeigt. Figur 9 betrifft den Druckschritt in der Druckstation 6. Die zuvor aufgetragene und verfestigte Bauteil-Schicht B1 bildet die Auftragsfläche F für den Pulveranteil A2. Der Pulveranteil A2 ist in Fig. 9 bereits auf der Auftragsfläche F abgelegt. Der Pulveranteil A2 ist mit einer im Vergleich zu dem Pulveranteil A1 konträren Polarität aufgeladen. Entsprechend ist die Auftragseinheit-Spannungsquelle 14 zur Erzeugung der Ablegespannung im Vergleich zu dem vorherigen Druckschritt umgepolt. Zur Erzeugung der Ablegespannung wird der Grundkörper 12 der Auftragseinheit 7 mit einer Spannung negativer Polarität beaufschlagt. Entsprechend weist das elektrische Transferfeld E eine entgegengesetzte Richtung auf.

Aufgrund der Verlagerbarkeit der Auftragseinheit 7 in z-Richtung kann unabhängig von einer Höhe bereits erzeugter Bauteil-Schichten ein gewünschter Abstand D zwischen an der Auftragseinheit 7 anhaftenden Pulveranteilen und der Auftragsfläche F eingehalten werden. Ebenso ermöglicht die Verlagerbarkeit der Übertragungsstruktur 39 in z-Richtung eine Anpassung der Position der Übertragungsvorrichtung 39 an die Höhe bereits erzeugter Bauteil-Schichten. Durch die geeignete Positionierung der Übertragungsstruktur 39 relativ zu der Auftragseinheit 7 ist die Stärke des Transferfeldes E unabhängig von der bereits erzeugten Bauteilhöhe einstellbar.

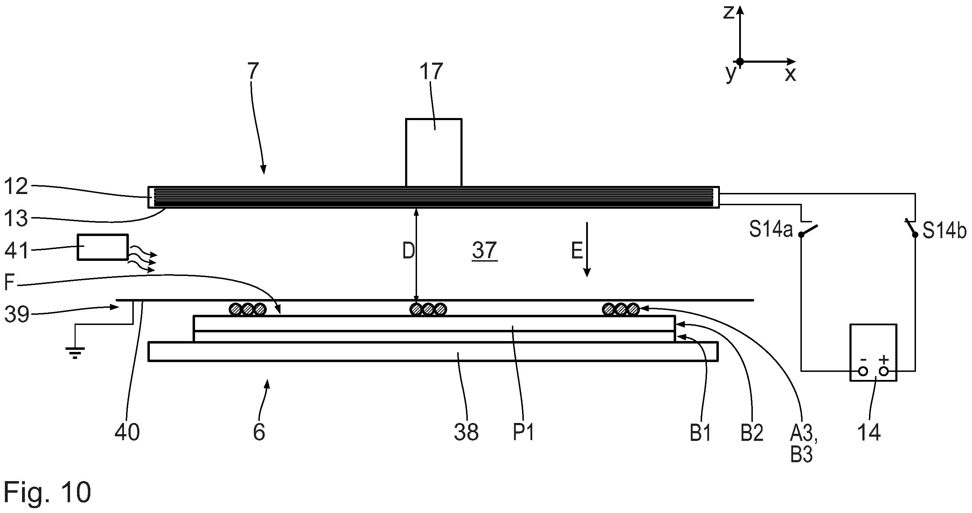

In Fig. 10 ist exemplarisch die Erzeugung einer weiteren Bauteil-Schicht B3 gezeigt. Fig. 10 zeigt die Druckstation 6 nach der Ablage eines Pulveranteils A3 auf die bereits erzeugten Bauteil-Schichten B1, B2. Die Oberfläche der zuletzt erzeugten Bauteil-Schicht B2 bildet die Auftragsfläche F für den Auftrag des Pulveranteils A3. Der Pulveranteil A3 besteht aus dem Pulver P2. Die Bauteil-Schicht B3 wird daher aus einem anderen Material gefertigt als die bereits erzeugten Bauteil-Schichten B1, B2. Während zur Erzeugung der Bauteil-Schichten B1, B2 die entsprechenden Pulveranteile A1, A2 vollflächig aufgetragen wurden, erfolgt der Pulverauftrag des Pulveranteils A3 selektiv.

In weiteren Verfahrensschritten kann ein weiterer Pulveranteil in Schicht-Bereichen der Bauteil-Schicht B3 aufgebracht werden, in welchen der Pulveranteil A3 nicht aufgebracht ist. Auf diese Weise können unterschiedliche Pulveranteile und damit unterschiedliche Materialien innerhalb einer Bauteil-Schicht kombiniert werden. Verschiedene Pulveranteile, die zur Fertigung derselben Bauteil-Schicht verwendet werden, werden mit der gleichen Polarität aufgeladen.

Bei dem gezeigten Ausführungsbeispiel werden alle Pulveranteile einer Bauteilschicht jeweils mit gleicher Polarität aufgeladen. Die Pulveranteile unterschiedlicher Bauteilschichten werden mit alternierender Polarität aufgeladen. Ein aufzutragender Pulveranteil einer weiteren Bauteil-schicht wird jeweils mit einer Polarität aufgeladen, die entgegengesetzt zu der Polarität der jeweiligen Auftragsfläche, also der Polarität der zuvor aufgetragenen Bauteilschicht, ist. Hierdurch resultiert eine besonders vorteilhafte elektrostatische Anziehung zwischen aufeinanderfolgenden Bauteilschichten. Zudem ist eine Ladungsakkumulation im zu erzeugenden Bauteil zuverlässig vermieden.

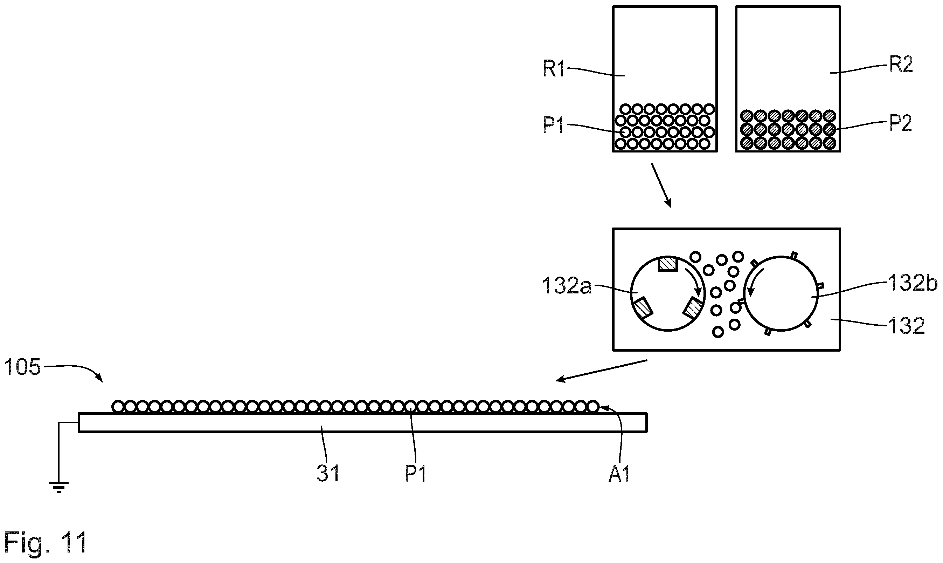

In Fig. 11 ist ein weiteres Ausführungsbeispiel einer Entwicklungsstation 105, einer Vorrichtung zur additiven Fertigung, gezeigt. Komponenten, die in Bezug auf das in den Figuren 1 bis 10 gezeigte Ausführungsbeispiel bereits beschrieben wurden, tragen die gleichen Bezugszeichen und werden nicht noch einmal im Detail erläutert.

Die Entwicklungsstation 105 weist eine Pulver-Aufladeeinheit 132 zur triboelektrischen Aufladung der Pulveranteile auf. Die Pulver-Aufladeeinheit 132 ist als Magnetbürstensystem ausgebildet. Der elektrostatisch aufzuladende Pulveranteil wird zwischen den Walzen 132a, 132b der Pulver-Aufladeeinheit 132 geführt und hierbei triboelektrisch aufgeladen. Das aufgeladene Pulver wird auf die geerdete Basisplatte 31 in Form einer Pulverschicht aufgebracht. Zur Aufladung unterschiedlicher Pulveranteile mit unterschiedlicher Polarität werden die zwei unterschiedlichen Pulver P1, P2 verwendet, die bei triboelektrischer Aufladung jeweils mit unterschiedlicher Polarität aufgeladen werden. Zur Erzeugung aufeinanderfolgender Bauteil-Schichten werden daher alternierend die Pulver P1, P2 verwendet, sodass die jeweiligen Pulveranteile mit unterschiedlicher Polarität aufgeladen werden. Mittels der triboelektrischen Aufladung der Pulver P1, P2 können Pulveranteile mit einer Schichtdicke von mehr als dem Zweifachen des mittleren Partikeldurchmessers der jeweiligen Pulver P1, P2 aufgetragen werden. Beispielsweise können Schichtdicken zwischen von etwa 1 bis etwa 5 mittleren Partikeldurchmessern aufgetragen werden.

Die Pulver P1, P2 sind beispielsweise Pulverformulierungen aus Polymerpartikeln, die mit geeigneten Ladungssteuerungsstoffen, insbesondere mit funktionalisierten Silikapartikeln, beschichtet sind. Die Pulver P1, P2 weisen beispielsweise ein Grundpulver in Form eines kommerziell erhältlichen Polymerpulvers auf. Für die triboelektrische Aufladung mit unterschiedlichen Polaritäten sind die Grundpulver jeweils mit anderen Ladungsteuerungsstoffen, insbesondere anderen funktionalisierten Silikapartikeln, beschichtet. Für die triboelektrische Aufladung mit negativer Polarität ist das Grundpulver beispielsweise mit einer Mischung aus Hexamethyldisilazan (HMDS) und Polydimethylsiloxan (PDMS) beschichtet. Für die triboelektrische Aufladung mit positiver Polarität ist das Grundpulver beispielsweise mit einer Mischung aus Polydimethylsiloxan (PDMS) und Stickstoffverbindungen - NR₂ und - NR₃ beschichtet. Der Anteil der funktionalisierten Silikapartikel beträgt jeweils zwischen 0,05 Gew.-% und 1 Gew-% bezogen auf die Masse des Polymers.

## Patentansprüche

1. Verfahren zur additiven Fertigung eines Bauteils, mit den Schritten
- Bereitstellen mindestens eines Pulvers (P1, P2) und
- Erzeugen mehrerer Bauteil-Schichten (B1, B2, B3) des zu fertigenden Bauteils, wobei zur Erzeugung einer Bauteil-Schicht (B1, B2, B3) mindestens ein Pulveranteil (A1, A2, A3) des mindestens einen Pulvers (P1, P2) aufgetragen wird, wobei
-- der Pulveranteil (A1, A2, A3) elektrostatisch aufgeladen wird,
-- eine Auftragseinheit (7) zumindest bereichsweise elektrostatisch aufgeladen wird, und
-- der elektrostatisch aufgeladene Pulveranteil (A1, A2, A3) mittels der zumindest bereichsweise elektrostatisch aufgeladenen Auftragseinheit (7) aufgenommen und auf eine Auftragsfläche (F) übertragen wird,
- wobei verschiedene zur Erzeugung der Bauteil-Schichten (B1, B2, B3) aufzutragende Pulveranteile (A1, A2, A3) mit unterschiedlicher Polarität elektrostatisch aufgeladen werden,
**dadurch gekennzeichnet, dass** zum Übertragen des Pulveranteils (A1, A2, A3) auf die Auftragsfläche (F) die Auftragseinheit (7) mechanisch angeregt wird mittels eines Aktors (17), insbesondere eines Piezoaktors, der Auftragseinheit (7).

2. Verfahren nach Anspruch 1, **dadurch gekennzeichnet, dass** das Aufnehmen und/oder Übertragen des elektrostatisch aufgeladenen Pulveranteils (A1, A2, A3) mittels der Auftragseinheit (7) berührungslos erfolgt.

3. Verfahren nach einem der vorgenannten Ansprüche, **dadurch gekennzeichnet, dass** der Pulveranteil (A1, A2, A3) an der Auftragseinheit (7) vorgeheizt wird, insbesondere mittels einer Temperiereinheit (15) der Auftragseinheit (7).

4. Verfahren nach Anspruch 3, **dadurch gekennzeichnet, dass** der Pulveranteil (A1, A2, A3) an der Auftragseinheit (7) auf eine Temperatur T vorgeheizt wird, für die gilt: TS - ΔT ≤ T < TS, wobei TS eine Schmelztemperatur des Pulveranteils (A1, A2, A3) ist und ΔT 30 °C, insbesondere 15 °C, insbesondere 10 °C, insbesondere 5 °C, beträgt.

5. Verfahren nach einem der Ansprüche 3 oder 4, **dadurch gekennzeichnet, dass** der Pulveranteil (A1, A2, A3) an der Auftragseinheit (7) auf eine Temperatur T vorgeheizt wird, für die gilt: TR - δT < T, wobei TR eine Rekristallisationstemperatur des Pulveranteils (A1, A2, A3) ist und δT 20 °C, insbesondere 15 °C, insbesondere 10 °C, insbesondere 5 °C, insbesondere 0 °C, beträgt.

6. Verfahren nach einem der vorgenannten Ansprüche, **dadurch gekennzeichnet, dass** die Auftragsfläche (F), insbesondere ein gesamter Bauraum (37), auf eine Temperatur T2 vorgeheizt wird, für die gilt: TR < T2, insbesondere TR < T2 < TS, wobei TR eine Rekristallisationstemperatur ist und wobei TS eine Schmelztemperatur der aufzutragenden Pulveranteile (A1, A2, A3) ist.

7. Verfahren nach einem der vorgenannten Ansprüche, **dadurch gekennzeichnet, dass** zum Übertragen des Pulveranteils (A1, A2, A3) auf die Auftragsfläche (F) die Auftragseinheit (7) in Schwingung versetzt wird, insbesondere mit einer Anregungsfrequenz zwischen 100 Hz und 20 kHz, bevorzugt mit einer Anregungsfrequenz im Bereich einer der Eigenfrequenzen der Auftragseinheit.

8. Verfahren nach einem der vorgenannten Ansprüche, **dadurch gekennzeichnet, dass** die mechanische Anregung mittels einer Pulsfolge aus einem starken Vor-Puls und unregelmäßigen Folge-Pulsen mit kleinerer Amplitude erfolgt.

9. Verfahren nach einem der vorgenannten Ansprüche, **dadurch gekennzeichnet, dass** zum Übertragen des Pulveranteils (A1, A2, A3) auf die Auftragsfläche (F) ein elektrisches Transferfeld (E) zwischen der Auftragseinheit (7) und einer Übertragungsstruktur (39) erzeugt wird.

10. Verfahren nach Anspruch 9, **dadurch gekennzeichnet, dass** die Auftragseinheit (7) mechanisch angeregt wird, nachdem das elektrische Transferfeld (E) vollständig aufgebaut ist.

11. Vorrichtung zur additiven Fertigung eines Bauteils, aufweisend
- mindestens ein Pulverreservoir (R1, R2) zur Bevorratung mindestens eines Pulvers (P1, P2),
- mindestens eine Pulver-Aufladeeinheit (32; 132) zur elektrostatischen Aufladung von Pulveranteilen (A1, A2, A3) und
- mindestens eine mindestens bereichsweise elektrostatisch aufladbare Auftragseinheit (7) zum Aufnehmen und zum Übertragen von elektrostatisch aufgeladenen Pulveranteilen (A1, A2, A3) auf eine Auftragsfläche (F),
- wobei die mindestens eine Pulver-Aufladeeinheit (32; 132) dazu ausgebildet ist, verschiedene Pulveranteile (A1, A2, A3) des mindestens einen Pulvers (P1, P2) zur Erzeugung von Bauteil-Schichten (B1, B2, B3) mit unterschiedlicher Polarität elektrostatisch aufzuladen,
**dadurch gekennzeichnet, dass** die Auftragseinheit (7) einen Aktor (17) aufweist zur Erzeugung einer mechanischen Anregung der Auftragseinheit (7).

12. Vorrichtung nach Anspruch 11, **dadurch gekennzeichnet, dass** die mindestens eine Auftragseinheit (7) eine Temperiereinheit (15) zum Vorheizen von Pulveranteilen (A1, A2, A3) an der Auftragseinheit (7) aufweist.

13. Vorrichtung nach Anspruch 12, **dadurch gekennzeichnet, dass** die Temperiereinheit (15) Fluidkanäle (16) für ein Wärmeübertragungsfluid aufweist, die in einem Grundkörper (12) der Auftragseinheit (7) ausgebildet sind.

14. Vorrichtung nach einem der Ansprüche 11 bis 13, **dadurch gekennzeichnet, dass** der Aktor (17) ein Piezoaktor ist.

15. Vorrichtung nach einem der Ansprüche 11 bis 14, **gekennzeichnet durch** eine Übertragungsstruktur (39) zur Erzeugung eines elektrischen Transferfelds (E) zwischen der Auftragseinheit (7) und der Übertragungsstruktur (39).

## Claims

1. Method for the additive manufacturing of a part, having the steps of
- providing at least one powder (P1, P2) and
- producing a plurality of part layers (B1, B2, B3) of the part to be manufactured, wherein in order to produce a part layer (B1, B2, B3) at least one powder portion (A1, A2, A3) of the at least one powder (P1, P2) is applied, wherein
-- the powder portion (A1, A2, A3) is electrostatically charged,
-- an application unit (7) is electrostatically charged at least in parts, and
-- the electrostatically charged powder portion (A1, A2, A3) is picked up by means of application unit (7) electrostatically charged at least in parts and transferred to an application surface (F),
- wherein various powder portions (A1, A2, A3) to be applied to produce the part layers (B1, B2, B3) are electrostatically charged with different polarity,
**characterised in that**
in order to transfer the powder portion (A1, A2, A3) to the application surface (F), the application unit (7) is mechanically excited by means of an actuator (17), in particular a piezo actuator, of the application unit (7).

2. Method according to claim 1, **characterised in that** the application unit (7) picks up and/or transfers the electrostatically charged powder portion (A1, A2, A3) in a contact-free manner.

3. Method according to one of the preceding claims, **characterised in that** the powder portion (A1, A2, A3) is pre-heated on the application unit (7), in particular by means of a temperature control unit (15) of the application unit (7).

4. Method according to claim 3, **characterised in that** the powder portion (A1, A2, A3) is pre-heated on the application unit (7) to a temperature T, for which: TS - ΔT ≤ T < TS, wherein TS is a melting temperature of the powder portion (A1, A2, A3) and ΔT is 30 °C, in particular 15 °C, in particular 10 °C, in particular 5 °C.

5. Method according to one of claims 3 or 4, **characterised in that** the powder portion (A1, A2, A3) is pre-heated on the application unit (7) to a temperature T, for which: TR - δT < T, wherein TR is a recrystallisation temperature of the powder portion (A1, A2, A3) and δT is 20 °C, in particular 15 °C, in particular 10 °C, in particular 5 °C, in particular 0 °C.

6. Method according to one of the preceding claims, **characterised in that** the application surface (F), in particular an entire installation space (37), is pre-heated to a temperature T2, for which: TR < T2, in particular TR < T2 < TS, wherein TR is a recrystallisation temperature and wherein TS is a melting temperature of the powder portions (A1, A2, A3) to be applied.

7. Method according to one of the preceding claims, **characterised in that** in order to transfer the powder portion (A1, A2, A3) to the application surface (F), the application unit (7) is caused to vibrate, in particular with an excitation frequency between 100 Hz and 20 kHz, preferably with an excitation frequency in the range of one of the natural frequencies of the application unit.

8. Method according to one of the preceding claims, **characterised in that** mechanical excitation takes place by means of a pulse sequence consisting of a strong initial pulse and irregular subsequent pulses with a smaller amplitude.

9. Method according to one of the preceding claims, **characterised in that** in order to transfer the powder portion (A1, A2, A3) to the application surface (F), an electrical transfer field (E) is produced between the application unit (7) and a transfer structure (39).

10. Method according to claim 9, **characterised in that** the application unit (7) is mechanically excited once the electrical transfer field (E) has been fully established.

11. Device for the additive manufacturing of a part, having
- at least one powder reservoir (R1, R2) for storing at least one powder (P1, P2),
- at least one powder charging unit (32; 132) for electrostatically charging powder portions (A1, A2, A3) and
- at least one application unit (7) which can be electrostatically charged at least in parts for picking up and transferring electrostatically charged powder portions (A1, A2, A3) to an application surface (F),
- wherein the at least one powder charging unit (32; 132) is designed to electrostatically charge various powder portions (A1, A2, A3) of the at least one powder (P1, P2) to produce part layers (B1, B2, B3) with different polarity,
**characterised in that**
the application unit (7) has an actuator (17) for generating mechanical excitation of the application unit (7).

12. Device according to claim 11, **characterised in that** the at least one application unit (7) has a temperature control unit (15) for pre-heating powder portions (A1, A2, A3) on the application unit (7).

13. Device according to claim 12, **characterised in that** the temperature control unit (15) has fluid channels (16) for a heat transfer fluid, which are formed in a base body (12) of the application unit (7).

14. Device according to one of claims 11 to 13, **characterised in that** the actuator (17) is a piezo actuator.

15. Device according to one of claims 11 to 14, **characterised by** a transfer structure (39) for producing an electrical transfer field (E) between the application unit (7) and the transfer structure (39).

## Revendications

1. Procédé de fabrication additive d'une pièce, comportant les étapes
- mise à disposition d'au moins une poudre (P1, P2) et
- génération de plusieurs couches de pièce (B1, B2, B3) de la pièce à fabriquer, au moins une portion de poudre (A1, A2, A3) de l'au moins une poudre (P1, P2) étant appliquée pour générer une couche de pièce (B1, B2, B3), dans lequel
-- la portion de poudre (A1, A2, A3) est chargée électrostatiquement,
-- une unité d'application (7) est chargée électrostatiquement au moins par sections, et
-- la portion de poudre (A1, A2, A3) chargée électrostatiquement est reçue et transférée sur une surface d'application (F) au moyen de l'unité d'application (7) chargée électrostatiquement au moins par sections,
- dans lequel différentes portions de poudre (A1, A2, A3) à appliquer pour générer les couches de pièce (B1, B2, B3) sont chargées électrostatiquement avec une polarité différente,
**caractérisé en ce que,**
pour transférer la portion de poudre (A1, A2, A3) sur la surface d'application (F), l'unité d'application (7) est excitée mécaniquement au moyen d'un actionneur (17), en particulier un actionneur piézoélectrique, de l'unité d'application (7).

2. Procédé selon la revendication 1, **caractérisé en ce que** la réception et/ou le transfert de la portion de poudre (A1, A2, A3) chargée électrostatiquement au moyen de l'unité d'application (7) s'effectuent sans contact.

3. Procédé selon l'une des revendications précédentes, **caractérisé en ce que** la portion de poudre (A1, A2, A3) est préchauffée sur l'unité d'application (7), en particulier au moyen d'une unité de régulation thermique (15) de l'unité d'application (7).

4. Procédé selon la revendication 3, **caractérisé en ce que** la portion de poudre (A1, A2, A3) est préchauffée sur l'unité d'application (7) à une température T, pour laquelle s'applique : TS - ΔT ≤ T < TS, où TS est une température de fusion de la portion de poudre (A1, A2, A3) et ΔT est de 30 °C, en particulier 15 °C, en particulier 10 °C, en particulier 5 °C.

5. Procédé selon l'une des revendications 3 ou 4, **caractérisé en ce que** la portion de poudre (A1, A2, A3) est préchauffée sur l'unité d'application (7) à une température T, pour laquelle s'applique : TR - δT < T, où TR est une température de recristallisation de la portion de poudre (A1, A2, A3) et δT est de 20 °C, en particulier 15 °C, en particulier 10 °C, en particulier 5 °C, en particulier 0 °C.

6. Procédé selon l'une des revendications précédentes, **caractérisé en ce que** la surface d'application (F), en particulier un espace de construction (37) complet, est préchauffée à une température T2, pour laquelle s'applique : TR < T2, en particulier TR < T2 < TS, où TR est une température de recristallisation et TS est une température de fusion des portions de poudre (A1, A2, A3) à appliquer.

7. Procédé selon l'une des revendications précédentes, **caractérisé en ce que,** pour transférer la portion de poudre (A1, A2, A3) sur la surface d'application (F), l'unité d'application (7) est mise en oscillation, en particulier avec une fréquence d'excitation comprise entre 100 Hz et 20 kHz, de préférence avec une fréquence d'excitation dans le domaine de l'une des fréquences propres de l'unité d'application.

8. Procédé selon l'une des revendications précédentes, **caractérisé en ce que** l'excitation mécanique s'effectue au moyen d'un train d'impulsions constitué d'une forte impulsion initiale et d'impulsions consécutives irrégulières avec une amplitude plus faible.

9. Procédé selon l'une des revendications précédentes, **caractérisé en ce que,** pour transférer la portion de poudre (A1, A2, A3) sur la surface d'application (F), un champ de transfert électrique (E) est généré entre l'unité d'application (7) et une structure de transfert (39).

10. Procédé selon la revendication 9, **caractérisé en ce que** l'unité d'application (7) est excitée mécaniquement après que le champ de transfert électrique (E) a été complètement établi.

11. Dispositif de fabrication additive d'une pièce, présentant
- au moins un réservoir de poudre (R1, R2) pour stocker au moins une poudre (P1, P2),
- au moins une unité de chargement de poudre (32 ; 132) pour charger électrostatiquement des portions de poudre (A1, A2, A3) et
- au moins une unité d'application (7) pouvant être chargée électrostatiquement au moins par sections, pour recevoir et transférer des portions de poudre (A1, A2, A3) chargées électrostatiquement sur une surface d'application (F),
- dans lequel l'au moins une unité de chargement de poudre (32 ; 132) est conçue pour charger électrostatiquement différentes portions de poudre (A1, A2, A3) de l'au moins une poudre (P1, P2) pour générer des couches de pièce (B1, B2, B3) avec une polarité différente,
**caractérisé en ce que**
l'unité d'application (7) présente un actionneur (17) pour générer une excitation mécanique de l'unité d'application (7).

12. Procédé selon la revendication 11, **caractérisé en ce que** l'au moins une unité d'application (7) présente une unité de régulation thermique (15) pour préchauffer des portions de poudre (A1, A2, A3) sur l'unité d'application (7).

13. Dispositif selon la revendication 12, **caractérisé en ce que** l'unité de régulation thermique (15) présente des canaux pour fluide (16) pour un fluide de transfert de chaleur, qui sont réalisés dans un corps de base (12) de l'unité d'application (7).

14. Dispositif selon l'une des revendications 11 à 13, **caractérisé en ce que** l'actionneur (17) est un actionneur piézoélectrique.

15. Dispositif selon l'une des revendications 11 à 14, **caractérisé par** une structure de transfert (39) pour générer un champ de transfert électrique (E) entre l'unité d'application (7) et la structure de transfert (39).
